# EUROPEAN PATENT APPLICATION

(11) **EP 4 512 912 A1**
(43) Date of publication of application: **26.02.2025**
(21) Application number: 23791914.7
(22) Date of filing: 20.04.2023
(51) Int. Cl.: C21D 8/12, C21D 9/46, C22C 38/00, C22C 38/60, H01F 1/147, C23C 22/00

(54) **GRAIN-ORIENTED ELECTROMAGNETIC STEEL SHEET AND PRODUCTION METHOD THEREFOR**

(30) Priority: 21.04.2022 JP 2022070071
(71) Applicant: NIPPON STEEL CORPORATION, Chiyoda-ku Tokyo 100-8071 (JP)
(72) Inventor: KATAOKA Takashi, Tokyo 100-8071 (JP); HIRAYAMA Takaaki, Tokyo 100-8071 (JP); KIKUZUKI Mayuko, Tokyo 100-8071 (JP); TANIGUCHI Shunsuke, Tokyo 100-8071 (JP); TAKEDA Kazutoshi, Tokyo 100-8071 (JP)
(74) Representative: Vossius & Partner Patentanwälte Rechtsanwälte mbB
(86) International application number: PCT/JP2023/015726
(87) International publication number: WO 2023/204266

(57) **Abstract**

A grain-oriented electrical steel sheet includes a base steel sheet and an insulation coating arranged in contact with the base steel sheet. When the grain-oriented electrical steel sheet is viewed in a cross section whose cutting direction is parallel to a thickness direction and perpendicular to a transverse direction, the base steel sheet includes an internally oxidized SiO₂ within a range of 2.0 µm from an interface with the insulation coating toward a thickness direction.

## Description

### TECHNICAL FIELD

The present invention relates to a grain-oriented electrical steel sheet. In particular, the present invention relates to the grain-oriented electrical steel sheet excellent in coating adhesion without relying on a forsterite film, and a method for manufacturing the same.

Priority is claimed on Japanese Patent Application No. 2022-070071, filed April 21, 2022, the content of which is incorporated herein by reference.

### BACKGROUND ART

A grain-oriented electrical steel sheet is used mainly in a transformer. A transformer is continuously excited over a long period of time from installation to disuse such that energy loss continuously occurs. Therefore, energy loss occurring when the transformer is magnetized by an alternating current, specifically, iron loss is a main index that determines the performance of the transformer.

In order to reduce iron loss of a grain-oriented electrical steel sheet, various methods have been developed. For instance, a method of highly aligning grains in the {110} <001> orientation called Goss orientation in a crystal structure, a method of increasing the content of a solid solution element such as Si that increases electric resistance in a steel sheet, and a method of reducing the thickness of a steel sheet are exemplified.

In addition, it is known that a method of applying tension to a steel sheet is effective for reducing iron loss. Thus, in general, in order to reduce the iron loss, an insulation coating is formed on a surface of the grain-oriented electrical steel sheet. The coating applies the tension to the grain-oriented electrical steel sheet, and thereby, reduces the iron loss as a single steel sheet. Moreover, the coating ensures interlaminar electrical insulation when the grain-oriented electrical steel sheets are utilized after being laminated, and thereby, reduces the iron loss as an iron core.

For instance, as the grain-oriented electrical steel sheet with the coating, a forsterite film which is an oxide film including Mg is formed on a surface of a base steel sheet, and then, the insulation coating is formed on a surface of the forsterite film. In this case, the coating on the base steel sheet includes the forsterite film and the insulation coating. Each of the forsterite film and the insulation coating has both a function of insuring the electrical insulation and applying the tension to the base steel sheet.

The forsterite film is formed, during final annealing in which secondary recrystallization is caused in the steel sheet, by reacting an annealing separator mainly containing magnesia (MgO) with silicon dioxide (SiO₂) formed on the base steel sheet during decarburization annealing, in heat treatment at 900 to 1200°C for 20 hours or more.

The insulation coating is formed by applying coating solution including, for instance, phosphate and colloidal silica to the steel sheet after final annealing, and by baking and drying it at 350 to 1150°C for 5 seconds or more.

In order that the coating performs the functions of ensuring the insulation and applying the tension to the base steel sheet, sufficient adhesion is required between the coating and the base steel sheet.

Conventionally, the above adhesion has been mainly ensured by the anchor effect derived from the unevenness of an interface between the base steel sheet and the forsterite film. However, in recent years, it has been found that the unevenness of the interface becomes an obstacle of movement of a magnetic domain wall when the grain-oriented electrical steel sheet is magnetized, and thus, the unevenness is also a factor that hinders the reduction of iron loss.

For instance, Patent Documents 1 to 3 disclose a technique to form the insulation coating even in a state in which the surface of the base steel sheet does not have the forsterite thereon and is made to be smooth in order to further reduce the iron loss.

In the technique disclosed in the Patent Document 1, the forsterite film is removed by pickling or the like and then the surface of the base steel sheet is smoothened by chemical polishing or electrolytic polishing. In the technique disclosed in the Patent Document 2, the formation of the forsterite film itself is suppressed by using an annealing separator containing alumina (Al₂O₃) and thereby the surface of the base steel sheet is smoothened. In the technique disclosed in the Patent Document 3, the formation of the forsterite film itself is suppressed by using an annealing separator containing bismuth chloride and thereby the surface of the base steel sheet is smoothened.

These techniques can smoothen the surface of the base steel sheet, but have a problem that it is difficult to obtain coating adhesion after the insulation coating is formed. When the coating adhesion is not obtained, it is difficult to apply the tension to the base steel sheet, and it is difficult to ensure the electrical insulation between the laminated steel sheets.

For instance, Patent Documents 4 to 6 disclose a technique to improve the coating adhesion even when the surface of the base steel sheet is made to be smooth.

**In** the technique disclosed in the Patent Document 4, the final annealing is performed using the annealing separator containing alumina, annealing is performed to form an oxide layer by controlling a thermal history and oxygen partial pressure, and then the insulation coating is formed. In the Patent Document 4, the intermediate oxide layer of an externally oxidized SiO₂ is formed on the base steel sheet, and the insulation coating is formed on the intermediate oxide layer. The Patent Document 4 attempts to improve the coating adhesion by making an element such as Mn solid-soluted in the intermediate oxide layer.

In the technique disclosed in the Patent Document 5, the final annealing is performed using the annealing separator containing bismuth chloride or the like, pickling treatment is performed, heat treatment is performed by controlling oxygen concentration and dew point, and then the insulation coating is formed. In the Patent Document 5, protrusions and recesses of etch pits are formed on the surface of the base steel sheet, a silica-containing oxide layer and an iron-based oxide layer are formed on the base steel sheet, and the insulation coating is formed on the iron-based oxide layer. The Patent Document 5 attempts to improve the coating adhesion by the protrusions and recesses of etch pits of the surface of the base steel sheet.

In the technique disclosed in the Patent Document 6, the final annealing is performed using the annealing separator containing bismuth chloride or the like, and then the insulation coating containing metal compounds and the insulation coating not containing metal compounds are formed. In the Patent Document 6, an intermediate layer is formed on the base steel sheet, and the insulation coating is formed on the intermediate layer. The Patent Document 6 attempts to improve the coating adhesion by optimally controlling each of manufacture processes.

### Citation List

### Patent Document

Patent Document 1: Japanese Unexamined Patent Application, First Publication No. S49-096920
Patent Document 2: Japanese Unexamined Patent Application, First Publication No. H06-049534
Patent Document 3: Japanese Unexamined Patent Application, First Publication No. H07-054155
Patent Document 4: PCT International Publication No. WO2020/012666
Patent Document 5: PCT International Publication No. WO2020/149345
Patent Document 6: PCT International Publication No. WO2020/149325

### SUMMARY OF INVENTION

### Technical Problem

As described above, in order to reduce the iron loss of the grain-oriented electrical steel sheet, it is effective to make the forsterite film not to exist and then to smooth the surface of the base steel sheet of the grain-oriented electrical steel sheet. However, the technique has a problem that it is difficult to obtain the coating adhesion necessary for reducing the iron loss.

In the techniques disclosed in Patent Documents 4 to 6, it is attempted to improve the coating adhesion without relying on the forsterite film. Even with the techniques, Although the coating adhesion is improved to a certain extent by the techniques. However, if the coating adhesion can be improved by a technique different from those of Patent Documents 4 to 6, options are industrially increased, which is preferable.

The present invention has been made in consideration of the above-mentioned situations. An object of the invention is to provide the grain-oriented electrical steel sheet excellent in the coating adhesion without relying on the forsterite film, and the method for manufacturing the same.

### Solution to Problem

An aspect of the present invention employs the following.
(1) A grain-oriented electrical steel sheet according to an aspect of the present invention includes:
   a base steel sheet; and an insulation coating arranged in contact with the base steel sheet, wherein
   the base steel sheet includes, as a chemical composition, by mass%,
   3.0 to 4.0% of Si,
   0.010 to 0.50% of Mn, and
   a balance including Fe and impurities,
   the base steel sheet includes an internally oxidized SiO₂ within a range of 2.0 µm from an interface with the insulation coating toward a thickness direction when viewing a cross section whose cutting direction is parallel to the thickness direction and perpendicular to a transverse direction.
(2) In the grain-oriented electrical steel sheet according to (1),
   the base steel sheet may further include, as the chemical composition, by mass%,
   0.010% or less of C,
   0.010% or less of N,
   0.020% or less of acid-soluble Al,
   0.040% or less of P,
   0.010% or less in total of S and Se,
   0.50% or less of Sn,
   0.50% or less of Cu,
   0.50% or less of Cr,
   0.50% or less of Sb,
   0.10% or less of Mo, and
   0.10% or less of Bi.
(3) In the grain-oriented electrical steel sheet according to (1) or (2),
   the internally oxidized SiO₂ may show a dendrite shape when viewing the cross section.
(4) In the grain-oriented electrical steel sheet according to any one of (1) to (3),
   when viewing the cross section at ten observation locations which are separated from each other on a sheet surface, the ten observation locations may include five or more of a location where the internally oxidized SiO₂ is included.
(5) A method for manufacturing the grain-oriented electrical steel sheet according to any one of (1) to (4) includes:
   a hot rolling process; a hot-rolled steel sheet annealing process; a cold rolling process; a decarburization annealing process; a final annealing process; a thermal oxidation annealing process; and an insulation coating forming process, wherein
   in the final annealing process,
   an annealing separator including 20 to 99.5 mass% of an alumina, 0.5 to 20 mass% of a bismuth chloride, and a balance including a magnesia and impurities as percent solid is applied to the steel sheet after the decarburization annealing process, the annealing separator is dried, and then the final annealing is performed, and
   in the thermal oxidation annealing process,
   the steel sheet after the final annealing process is heated from a room temperature to a temperature range of 800 to 1100°C and is soaked for 5 to 200 seconds in a temperature range of 800 to 1100°C in an atmosphere such that an oxygen concentration is less than 1.0 vol% and an oxidation degree PH₂O/PH₂ is 0.010 to less than 0.50.
(6) In the method for manufacturing the grain-oriented electrical steel sheet according to (5),
   in the thermal oxidation annealing process,
   as a first surface treatment, the steel sheet after the final annealing process may be immersed for 3 to 60 seconds in a first treatment solution such that at least one of a hydrochloric acid, a sulfuric acid, a nitric acid, and a phosphoric acid is included, a total acid concentration is 1 to 20 mass%, and a solution temperature is 50 to 90°C, and
   as a heat treatment, the steel sheet after the first surface treatment may be heated and soaked.
(7) In the method for manufacturing the grain-oriented electrical steel sheet according to (5) or (6),
   as a second surface treatment, the steel sheet after being heated and soaked may be immersed for 3 to 60 seconds in a second treatment solution such that at least one of a hydrochloric acid, a sulfuric acid, a nitric acid, and a phosphoric acid is included, a total acid concentration is 1 to 10 mass%, and a solution temperature of 50 to 90°C.

### Advantageous Effects of Invention

According to the above aspects of the present invention, it is possible to provide the grain-oriented electrical steel sheet excellent in the coating adhesion without relying on the forsterite film, and the method for manufacturing the same. In the grain-oriented electrical steel sheet, the forsterite film is made not to exist, the surface of the base steel sheet is smooth, and the surface region of the base steel sheet is internally oxidized favorably, so that the coating adhesion is excellent. Therefore, it is possible to preferably improve the iron loss.

### BRIEF DESCRIPTION OF DRAWINGS

Figure 1 is a cross-sectional illustration showing a grain-oriented electrical steel sheet according to an embodiment of the present invention.
Figure 2 is a flow chart showing a method for manufacturing the grain-oriented electrical steel sheet according to the embodiment.

### DESCRIPTION OF EMBODIMENTS

Hereinafter, a preferable embodiment of the present invention is described in detail. However, the present invention is not limited only to the configuration which is disclosed in the embodiment, and various modifications are possible without departing from the aspect of the present invention. In addition, the limitation range as described below includes a lower limit and an upper limit thereof. However, the value expressed by "more than" or "less than" does not include in the limitation range.

As described above, when the forsterite film is made not to exist and the surface of the base steel sheet of the grain-oriented electrical steel sheet is made to be smooth, the magnetic domain wall can easily move at the time that the grain-oriented electrical steel sheet is magnetized, and thus, the iron loss is improved. However, the technique has a problem that it is difficult to obtain the coating adhesion necessary for reducing the iron loss.

The present inventors have made a thorough investigation, and as a result, found the grain-oriented electrical steel sheet excellent in the coating adhesion without relying on the forsterite film. Hereinafter, the grain-oriented electrical steel sheet according to the present embodiment is described in detail.

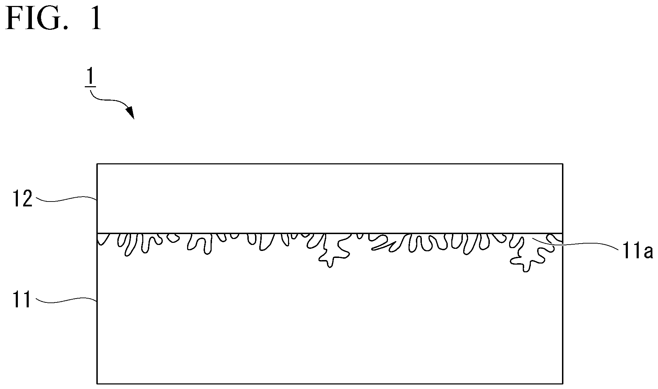

Figure 1 is a cross-sectional illustration showing the grain-oriented electrical steel sheet according to present embodiment. As shown in Figure 1, the grain-oriented electrical steel sheet 1 according to present embodiment includes a base steel sheet 11 and an insulation coating 12 arranged in contact with the base steel sheet 11 when viewing a cross section whose cutting direction is parallel to a thickness direction and perpendicular to a transverse direction. Herein, the layer structure in which the insulation coating 12 is arranged in contact with the base steel sheet 11 indicates that the forsterite film does not exist and indicates that the base steel sheet 11 includes the smooth surface (smooth surface equivalent to cold-rolled steel sheet). In addition, in the grain-oriented electrical steel sheet 1 according to the present embodiment, when viewing the cross section, the base steel sheet 11 includes an internally oxidized SiO₂ 11a within a range of 2.0 µm from an interface with the insulation coating 12 toward a thickness direction.

As described above, in order to improve the iron loss, it is effective to make the magnetic domain wall move easily by smoothing the surface of the base steel sheet, and also, effective to apply the tension to the base steel sheet and to ensure the electrical insulation between the laminated steel sheets by steadily adhering the insulation coating to the base steel sheet. In the grain-oriented electrical steel sheet according to the present embodiment, the surface smoothness of the base steel sheet is secured by arranging the insulation coating in contact with the base steel sheet (by making the forsterite not to exist), and also, the adhesion between the base steel sheet and the insulation coating is secured by the internally oxidized SiO₂ described above. Therefore, the grain-oriented electrical steel sheet according to the present embodiment is excellent in the iron loss.

The technical reason is not clear at present why the internally oxidized SiO₂ included within the range of 2.0 µm from the interface with the insulation coating toward the thickness direction in the base steel sheet improves the coating adhesion, but is presumed to be as described below.

The internally oxidized SiO₂ is mainly composed of SiO₂, and is formed by oxidization of Si contained in the base steel sheet during annealing. In the grain-oriented electrical steel sheet according to the present embodiment, the internally oxidized SiO₂ specified in the present embodiment is formed in the vicinity of the surface of the base steel sheet by controlling manufacturing conditions. When the internally oxidized SiO₂ is formed in the vicinity of the surface of the base steel sheet, it is considered that the Si content in the base metal (matrix) around the internally oxidized SiO₂ decreases and that the region becomes close to pure iron. It is considered that the matrix in a state close to pure iron and P (phosphorus) included in the insulation coating chemically interact with each other and thereby the coating adhesion is improved. Therefore, it is considered that as the internally oxidized SiO₂ is formed in the vicinity of the surface in the base steel sheet, the coating adhesion tends to be improved. Specifically, when the internally oxidized SiO₂ is included in the range of 2.0 µm from the interface with the insulation coating toward the thickness direction in the base steel sheet, the adhesion between the base steel sheet and the insulation coating is improved.

Herein, external oxidation and internal oxidation are known as an oxidation state when Si contained in the base steel sheet is oxidized during annealing. For instance, the external oxidation is an oxidation state which an alloying element (for instance, Si) in the base steel sheet is oxidized after diffused to the surface of the base steel sheet, and is oxidation that occurs in an atmosphere having low oxidizability, and forms an oxide film on the surface of the base steel sheet. On the other hand, the internal oxidation is an oxidation state in which an alloying element (for instance, Si) in the base steel sheet is oxidized with little diffusion in the base steel sheet, and is oxidation that occurs in an atmosphere having high oxidizability, and forms an oxide in a precipitate shape or a dendrite shape in the vicinity of the surface in the base steel sheet.

Conventionally, it has been generally considered that external oxidation does not hinder magnetic domain wall motion when the steel sheet is magnetized, but internal oxidation hinders magnetic domain wall motion. Therefore, in the related art, internal oxidation of the base steel sheet has been avoided. On the other hand, in the grain-oriented electrical steel sheet according to the present embodiment, internal oxidation is effectively utilized. As a result of investigation by the present inventors, it has been found that when an internally oxidized SiO₂ specified in the present embodiment is formed by controlling manufacturing conditions, the coating adhesion can be improved without hindering magnetic domain wall motion. In the grain-oriented electrical steel sheet according to the present embodiment, since the internally oxidized SiO₂ is preferentially formed in the vicinity of the surface in the base steel sheet, the magnetic domain wall motion is not hindered, and the matrix around the internally oxidized SiO₂ is in a state close to pure iron, so that it is considered that the coating adhesion is increased by chemical interaction with the insulation coating.

The presence or absence of the internally oxidized SiO₂ may be confirmed by observing a cross section whose cutting direction is parallel to the thickness direction and perpendicular to the transverse direction. For instance, the cross section may be observed with a transmission electron microscope (TEM). In the grain-oriented electrical steel sheet according to the present embodiment, it is determined that the internally oxidized SiO₂ is contained in the base steel sheet when it is confirmed by the method described below.

Specifically, at first, a test piece is cut out by focused ion beam (FIB) processing such that the cutting direction is parallel to the thickness direction and perpendicular to the transverse direction, and the cross-sectional structure of this cross section is observed with the TEM at a magnification at which each layer enters the observed visual field. When each layer does not enter the observed visual field, the cross-sectional structure is observed in a plurality of continuous visual fields. For instance, observation may be performed in a visual field of 1 µm or more × 1 µm or more, preferably in a visual field of approximately 10 µm × 8 µm. In addition, the condition may be an acceleration voltage of 200 kV. In the case of observation in only one visual field, it is difficult to obtain average information of the steel sheet, and thus, it may be determined by observing ten locations randomly selected and separated from each other.

For specifying each layer in the cross-sectional structure, line analysis is performed along the thickness direction by energy dispersive x-ray spectroscopy (EDS) provided in the TEM, and quantitative analysis of the chemical composition at each layer is performed. The elements to be quantitatively analyzed are five elements: Fe, P, Si, O, and Mg.

From the quantitative analysis result by the TEM-EDS, a region in the form of a layer existing at the deepest position in the thickness direction and having an Fe content of 80 atom% or more excluding measurement noise is determined to be a base steel sheet, and a region excluding the base steel sheet is determined to be other layers.

When the region that is the base steel sheet is determined, precipitates, inclusions, pores, and the like included in each layer are not considered as determination objects, and but the region that satisfies the quantitative analysis results as a matrix is determined as the base steel sheet. For instance, when it is confirmed from a bright field image, a dark field image, or a line analysis result that precipitates, inclusions, pores, or the like exist on the scanning line of the line analysis, this region is not considered for the determination, and the quantitative analysis results as the matrix is utilized for the determination. Herein, the precipitates, inclusions, and pores can be distinguished from the matrix by contrast, and can be distinguished from the matrix by the amounts of constituent elements based on the quantitative analysis results. Herein, when the base steel sheet is determined, it is preferable to determine the base steel sheet at a position where precipitates, inclusions, and pores are not included on the scanning line of the line analysis.

With respect to the region excluding the base steel sheet determined above, from the quantitative analysis result by the TEM-EDS, a region in which the Fe content is less than 80 atom%, the P content is 5 atom% or more, and the O content is 30 atom% or more, excluding measurement noise, is determined to be the insulation coating (phosphoric acid-based coating). Herein, aluminum, magnesium, nickel, and the like derived from phosphate may be contained in the phosphoric acid-based coating in addition to the above three elements that are elements for determining the phosphoric acid-based coating. In addition, silicon derived from colloidal silica may be contained.

When the region that is the phosphoric acid-based coating is determined, precipitates, inclusions, pores, and the like included in each coating are not considered as determination objects, and the region that satisfies the quantitative analysis results as a matrix is determined as the phosphoric acid-based coating. For instance, when it is confirmed from a bright field image, a dark field image, or a line analysis result that precipitates, inclusions, pores, or the like exist on the scanning line of the line analysis, this region is not considered for the determination, and the quantitative analysis results as the matrix is utilized for the determination. Herein, the precipitates, inclusions, and pores can be distinguished from the matrix by contrast, and can be distinguished from the matrix by the amounts of constituent elements based on the quantitative analysis results. Herein, when the phosphoric acid-based coating is determined, it is preferable to determine the phosphoric acid-based coating at a position where precipitates, inclusions, and pores are not included on the scanning line of the line analysis.

Since the grain-oriented electrical steel sheet according to the present embodiment does not include an intermediate ceramic layer such as a forsterite film or an externally oxidized film, when the layer structure is determined by the above method, the base steel sheet and the insulation coating arranged in contact with the base steel sheet are confirmed. For instance, the base steel sheet has a thickness of 0.17 to 0.29 mm, and the insulation coating has a thickness of 0.1 to 10 µm.

However, when the electrical steel sheet includes a forsterite film as the intermediate ceramic layer, the forsterite film is confirmed between the base steel sheet and the insulation coating (phosphoric acid-based coating) determined by the above method. This forsterite film satisfies, for instance, as an average of the entire coating, that the Fe content is less than 80 atom% on average, the P content is less than 5 atom% on average, the Si content is 5 atom% or more on average, the O content is 30 atom% or more on average, and the Mg content is 10 atom% or more on average. Herein, the quantitative analysis result of the forsterite film is a quantitative analysis result as a matrix that does not include analysis results of precipitates, inclusions, pores, and the like contained in the forsterite film. Herein, when the forsterite film is determined, it is preferable to determine the forsterite film at a position where precipitates, inclusions, and pores are not included on the scanning line of the line analysis. In general, the forsterite film has a thickness of 0.1 to 10 µm.

Similarly, when the electrical steel sheet includes an externally oxidized film as the intermediate ceramic layer, the externally oxidized film is confirmed between the base steel sheet and the insulation coating (phosphoric acid-based coating) determined by the above method. This externally oxidized film satisfies, for instance, as an average of the entire oxide film, that the Fe content is less than 80 atom% on average, the P content is less than 5 atom% on average, the Si content is 20 atom% or more on average, the O content is 30 atom% or more on average, and the Mg content is less than 10 atom% on average. Herein, the quantitative analysis result of the externally oxidized film is a quantitative analysis result as a matrix that does not include analysis results of precipitates, inclusions, pores, and the like contained in the externally oxidized film. Herein, when the externally oxidized film is determined, it is preferable to determine the externally oxidized film at a position where precipitates, inclusions, and pores are not included on the scanning line of the line analysis. In general, the externally oxidized film has a thickness of 2 to 500 nm.

In the grain-oriented electrical steel sheet according to the present embodiment, since the base steel sheet and the insulation coating arranged in contact with the base steel sheet are confirmed by the above method, whether or not the internally oxidized SiO₂ is contained in the base steel sheet and a region containing the internally oxidized SiO₂ in the base steel sheet may be confirmed by the EDS provided in the TEM.

For instance, a precipitate observed in the base steel sheet in a bright field image of the TEM is subjected to line analysis along the thickness direction in the base steel sheet determined by the above method using the TEM-EDS, and a chemical composition is quantitatively analyzed. The elements to be quantitatively analyzed are five elements of Fe, P, Si, Al, and O. From the quantitative analysis result by the TEM-EDS, a region in which the Fe content is less than 80 atom%, the Si content is 30 atom% or more, and the O content is 55 atom% or more, excluding measurement noise, is determined to be the internally oxidized SiO₂. Herein, in the grain-oriented electrical steel sheet according to the present embodiment, since the internally oxidized SiO₂ contained in the base steel sheet is amorphous, clear diffraction spots are not confirmed when electron beam diffraction is performed, and a broad annular electron diffraction pattern is mainly confirmed.

In the grain-oriented electrical steel sheet according to the present embodiment, when the internally oxidized SiO₂ determined by the above method is included within the range of 2.0 µm from the interface with the insulation coating toward the thickness direction in the base steel sheet, the adhesion between the base steel sheet and the insulation coating is improved.

In addition, in the grain-oriented electrical steel sheet according to the present embodiment, the area fraction of the internally oxidized SiO₂ in the area of the range within 2.0 µm from the interface with the insulation coating toward the thickness direction in the base steel sheet is preferably 0.2% or more when viewing the cross section whose cutting direction is parallel to the thickness direction and perpendicular to the transverse direction. When the internally oxidized SiO₂ satisfies the above conditions, the internally oxidized SiO₂ preferentially exists in the vicinity of the surface in the base steel sheet, and as a result, the coating adhesion is preferably improved.

The area fraction is preferably 0.5% or more, and more preferably 1.0% or more. The upper limit of the area fraction is not particularly limited. For instance, the area fraction is preferably 8% or less, preferably 5% or less, preferably less than 2%, and more preferably 1.5% or less.

Herein, the area fraction may be determined based on the observation and identification with the TEM. For instance, the area fraction may be calculated by determining the area of the range within 2.0 µm from the interface with the insulation coating toward the thickness direction in the base steel sheet and the total area of the internally oxidized SiO₂ included in the region. The above area and area fraction may be determined by image analysis. Herein, in the binarization of the image for performing the image analysis, the image may be binarized by manually coloring the internally oxidized SiO₂ with respect to the microstructure photograph based on the identification result of the internally oxidized SiO₂.

In addition, in the grain-oriented electrical steel sheet according to the present embodiment, it is preferable that the internally oxidized SiO₂ specified above shows a dendrite shape when viewing the cross section whose cutting direction is parallel to the thickness direction and perpendicular to the transverse direction. Specifically, when viewing the cross section, an isoperimetric constant derived from the area and the peripheral length of the internally oxidized SiO₂ is preferably less than 0.350. When the internally oxidized SiO₂ satisfies the above conditions, the coating adhesion is preferably improved.

Herein, the dendrite shape (isoperimetric constant) of the internally oxidized SiO₂ may be confirmed by the method described below. In the grain-oriented electrical steel sheet according to the present embodiment, it is determined that the internally oxidized SiO₂ shows a dendrite shape when it is confirmed by the method described below.

The isoperimetric constant is derived according to 4π × (area) ÷ (peripheral length)², and represents the degree of protrusion and recess shapes such as a dendrite shape. In the case of an ideal circle, 1 is represented, and the upper limit is 1, and a value smaller than 1 indicates that the protrusion and recess shapes of the surface are more complicated. In deriving the area, similarly to the case of calculating the area fraction of the internally oxidized SiO₂, the area fraction may be determined by image analysis or manual work from the microstructure photograph of the TEM. The peripheral length may be determined from the microstructure photograph by image analysis using image analysis software such as image J.

The isoperimetric constant is preferably less than 0.20, and more preferably less than 0.10. The lower limit of the isoperimetric constant is not particularly limited, and is preferably as small as possible, but, since it is not industrially easy to control the isoperimetric constant to 0, the isoperimetric constant may be 0.020 or more.

In addition, in the grain-oriented electrical steel sheet according to the present embodiment, when viewing the cross section at ten observation locations which are separated from each other on a sheet surface, the internally oxidized SiO₂ is preferably included in five or more observation locations. When the internally oxidized SiO₂ satisfies the above conditions, the internally oxidized SiO₂ is distributed over a wide region with respect to the sheet surface of the grain-oriented electrical steel sheet, and as a result, the coating adhesion is preferably improved.

The number of observation locations containing the internally oxidized SiO₂ is preferably eight or more, and more preferably nine or more. The upper limit of the observation locations containing the internally oxidized SiO₂ is not particularly limited, and may be ten locations because a larger number of observation locations is preferable. The number of observation locations containing the internally oxidized SiO₂ may be nine or less.

In addition, in the grain-oriented electrical steel sheet according to the present embodiment, a coating residual area fraction when the grain-oriented electrical steel sheet is wound around a cylinder having a diameter of 20 mm and bent 180° is preferably 80% or more, more preferably 85% or more, more preferably 90% or more, and more preferably 95% or more. The upper limit of the coating residual area fraction is not particularly limited, but it may be, for instance, 100%.

The coating residual area fraction may be evaluated by a coating residual fraction when the test piece is wound around a cylinder having a diameter of 20 mm and bent 180°. The area fraction of the coating residual surface in the area of the steel sheet in contact with the cylinder may be calculated and the area of the steel sheet in contact with a roll is determined by calculation. The area of the residual surface may be determined by capturing a photograph of the steel sheet after the test and performing image analysis on the captured image.

In addition, in the grain-oriented electrical steel sheet according to the present embodiment, the base steel sheet contains a basic element as a chemical composition, contains an optional element as necessary, and the balance includes Fe and impurities.

For instance, the base steel sheet may include, as a chemical composition, by mass%
3.0 to 4.0% of Si,
0.010 to 0.50% of Mn,
0 to 0.010% of C,
0 to 0.010% of N,
0 to 0.020% of acid-soluble Al,
0 to 0.040% of P,
0 to 0.010% in total of S and Se,
0 to 0.50% of Sn,
0 to 0.50% of Cu,
0 to 0.50% of Cr,
0 to 0.50% of Sb,
0 to 0.10% of Mo,
0 to 0.10% of Bi, and
a balance including Fe and impurities.

In addition, the base steel sheet may contain, as a chemical composition, by mass%, at least one selected from the group consisting of
0.0050 to 0.50% of Sn,
0.010 to 0.50% of Cu,
0.010 to 0.50% of Cr,
0.010 to 0.50% of Sb,
0.0050 to 0.10% of Mo, and
0.00050 to 0.10% of Bi.

### 3.0 to 4.0 mass% of Si

Si (silicon) is a basic element for the base steel sheet. When the Si content is less than 3.0%, the eddy-current loss cannot be sufficiently reduced, so that favorable magnetic characteristics cannot be obtained. Therefore, the Si content is 3.0% or more. The Si content is preferably 3.10% or more, and more preferably 3.20% or more. On the other hand, when the Si content is more than 4.0%, the steel sheet is embrittled, and the passability is remarkably deteriorated during manufacture, and thus the Si content is 4.0% or less. The Si content is preferably 3.70% or less, more preferably 3.60% or less, and more preferably 3.50% or less.

### 0.010 to 0.50 mass% of Mn

Mn (manganese) is a basic element for the base steel sheet. When the Mn content is less than 0.010%, MnS or MnSe functioning as an inhibitor is hardly formed, secondary recrystallization does not sufficiently proceed, and favorable magnetic characteristics cannot be obtained. Therefore, the Mn content is 0.010% or more. The Mn content is preferably 0.030% or more, and more preferably 0.050% or more. On the other hand, when the Mn content is more than 0.50%, the steel undergoes phase transformation during secondary recrystallization annealing, secondary recrystallization does not sufficiently proceed, and favorable magnetic characteristics cannot be obtained, and therefore the Mn content is 0.50% or less. The Mn content is preferably 0.20% or less, more preferably 0.15% or less, and more preferably 0.10% or less.

### 0 to 0.010 mass% of C

C (carbon) is an optional element for the base steel sheet. C is contained in a steel piece (slab), but when C excessively remains in the base steel sheet after the final annealing, favorable iron loss characteristics may not be obtained. Therefore, the C content of the base steel sheet may be 0.010% or less. The C content is preferably 0.0050% or less, and more preferably 0.0030% or less. On the other hand, the lower limit of the C content of the base steel sheet is not particularly limited, and it may be 0%. However, since it is not industrially easy to control the C content to 0%, the C content may be more than 0% or 0.00010% or more.

### 0 to 0.010 mass% of N

N (nitrogen) is an optional element for the base steel sheet. N is contained in a steel piece (slab), but when N excessively remains in the base steel sheet after the final annealing, magnetic characteristics may be adversely affected. Therefore, the N content of the base steel sheet may be 0.010% or less. The N content is preferably 0.0090% or less, and more preferably 0.0080% or less. On the other hand, the lower limit of the N content of the base steel sheet is not particularly limited, and it may be 0%. However, since N forms AlN and has an effect as an inhibitor at the time of secondary recrystallization, the N content may be more than 0% or 0.00010% or more.

### 0 to 0.020 mass% of acid-soluble Al

Acid-soluble Al (aluminum) (sol.Al) is an optional element for the base steel sheet. Acid-soluble Al is contained in a steel piece (slab), but when acid-soluble Al excessively remains in the base steel sheet after the final annealing, magnetic characteristics may be adversely affected. Therefore, the acid-soluble Al content of the base steel sheet may be 0.020% or less. The acid-soluble Al content is preferably 0.0150% or less, and more preferably 0.010% or less. On the other hand, the lower limit of the acid-soluble Al content of the base steel sheet is not particularly limited, and it may be 0%. However, since acid-soluble Al forms AlN and has an effect as an inhibitor at the time of secondary recrystallization, the acid-soluble Al content may be more than 0% or 0.00010% or more.

### 0 to 0.040 mass% of P

P (phosphorus) is an optional element for the base steel sheet. When the P content exceeds 0.040%, the workability of the steel sheet may be significantly deteriorated. Therefore, the P content may be 0.040% or less. The P content is preferably 0.030% or less, and more preferably 0.020% or less. On the other hand, the lower limit of the P content is not particularly limited, and it may be 0%. However, since P has an effect of improving the texture and improving the magnetic characteristics of the steel sheet, the P content may be more than 0% or 0.0020% or more.

### 0 to 0.010 mass% in total of S and Se

S (sulfur) and Se (selenium) are optional elements for the base steel sheet. S and Se are contained in a steel piece (slab), but when S and Se excessively remain in the base steel sheet after the final annealing, magnetic characteristics may be adversely affected. Therefore, the total amount of S and Se of the base steel sheet may be 0.010% or less. On the other hand, the lower limit of the total amount of S and Se of the base steel sheet is not particularly limited, and it may be 0%. However, since S and Se form MnS or MnSe and have an effect as an inhibitor at the time of secondary recrystallization, the total amount of S and Se may be more than 0% or 0.0050% or more.

### 0 to 0.50 mass% of Sn

Sn (tin) is an optional element for the base steel sheet. When the Sn content is more than 0.50%, secondary recrystallization becomes unstable, and magnetic characteristics may be adversely affected. Therefore, the Sn content may be 0.50% or less. The Sn content is preferably 0.30% or less, and more preferably 0.150% or less. On the other hand, the lower limit of the Sn content is not particularly limited, and it may be 0%. However, since Sn has an effect of improving magnetic characteristics by increasing the development degree of the Goss orientation, the Sn content may be more than 0% or 0.0050% or more.

### 0 to 0.50 mass% of Cu

Cu (copper) is an optional element for the base steel sheet. When the Cu content exceeds 0.50%, the steel sheet may be embrittled during hot rolling. Therefore, the Cu content may be 0.50% or less. The Cu content is preferably 0.30% or less, and more preferably 0.10% or less. On the other hand, the lower limit of the Cu content is not particularly limited, and it may be 0%. However, since Cu has an effect of improving magnetic characteristics by increasing the development degree of the Goss orientation, the Cu content may be more than 0% or 0.010% or more.

### 0 to 0.50 mass% of Cr

Cr (chromium) is an optional element for the base steel sheet. When the Cr content is more than 0.50%, an Cr oxide is formed, and magnetic characteristics may be adversely affected. Therefore, the Cr content may be 0.50% or less. The Cr content is preferably 0.30% or less, and more preferably 0.10% or less. On the other hand, the lower limit of the Cr content is not particularly limited, and it may be 0%. However, since Cr has an effect of improving magnetic characteristics by increasing the development degree of the Goss orientation, the Cr content may be more than 0% or 0.010% or more.

### 0 to 0.50 mass% of Sb

Sb (antimony) is an optional element for the base steel sheet. When the Sb content is more than 0.50%, magnetic characteristics may be adversely affected. Therefore, the Sb content may be 0.50% or less. The Sb content is preferably 0.30% or less, and more preferably 0.10% or less. On the other hand, the lower limit of the Sb content is not particularly limited, and it may be 0%. However, since Sb functions as an inhibitor and has an effect of stabilizing secondary recrystallization, the Sb content may be more than 0% or 0.010% or more.

### 0 to 0.10 mass% of Mo

Mo (molybdenum) is an optional element for the base steel sheet. When the Mo content is more than 0.10%, a problem may occur in the rollability of the steel sheet. Therefore, the Mo content may be 0.10% or less. The Mo content is preferably 0.08% or less, and more preferably 0.05% or less. On the other hand, the lower limit of the Mo content is not particularly limited, and it may be 0%. However, since Mo has an effect of improving magnetic characteristics by increasing the development degree of the Goss orientation, the Mo content may be more than 0% or 0.0050% or more.

### 0 to 0.10 mass% of Bi

Bi (bismuth) is an optional element for the base steel sheet. When the Bi content is more than 0.10%, the passability during cold rolling may be deteriorated. In addition, when the purification at the time of the final annealing is insufficient and Bi remains excessively, the magnetic characteristics may be adversely affected. Therefore, the Bi content may be 0.10% or less. The Bi content is preferably 0.050% or less, more preferably 0.020% or less, and more preferably 0.0010% or less. On the other hand, the lower limit of the Bi content is not particularly limited, and it may be 0%. However, since Bi has an effect of improving magnetic characteristics, the Bi content may be more than 0% or 0.00050% or more.

The base steel sheet of the grain-oriented electrical steel sheet according to the present embodiment may contain impurities. Herein, the impurities correspond to elements which are contaminated during industrial manufacture of steel from ores and scrap that are used as a raw material of steel, or from environment of a manufacturing process.

The chemical composition of the base steel sheet described above may be measured by a general analysis method. For instance, the chemical composition may be measured by using ICP-AES (Inductively Coupled Plasma-Atomic Emission Spectrometer: inductively coupled plasma emission spectroscopy spectrometry). Herein, the acid soluble Al may be measured by ICP-AES using filtrate after heating and dissolving the sample in acid. In addition, C and S may be measured by the infrared absorption method after combustion, N may be measured by the thermal conductometric method after fusion in a current of inert gas, and O may be measured by, for instance, the non-dispersive infrared absorption method after fusion in a current of inert gas.

Herein, the chemical composition is a component of the base steel sheet. When the grain-oriented electrical steel sheet, which is a measurement sample, includes an insulation coating or the like on the surface, the chemical composition is measured after removing the coating or the like by the method described below.

For instance, as a method for removing the insulation coating, the grain oriented electrical steel sheet with the coating may be immersed in hot alkaline solution. Specifically, it is possible to remove the insulation coating from the grain oriented electrical steel sheet by immersing the steel sheet in sodium hydroxide aqueous solution which includes 30 to 50 mass% of NaOH and 50 to 70 mass% of H₂O at 80 to 90°C for 5 to 10 minutes, washing it with water, and then, drying it. Moreover, the immersing time in sodium hydroxide aqueous solution may be adjusted depending on the thickness of the insulation coating.

In addition, although the grain-oriented electrical steel sheet according to the present embodiment does not include a forsterite film, when it is desired to remove the forsterite film, the grain-oriented electrical steel sheet in which the insulation coating is removed by the above method may be immersed in hot hydrochloric acid. Specifically, it is possible to remove the forsterite film by previously investigating the preferred concentration of hydrochloric acid for removing the forsterite film to be dissolved, immersing the steel sheet in the hydrochloric acid with the above concentration (for instance, 30 to 40 mass% of HCl) at 80 to 90°C for 1 to 5 minutes, washing it with water, and then, drying it. In general, film and coating are removed by selectively using the solution, for example, the alkaline solution is used for removing the insulation coating, and the hydrochloric acid is used for removing the forsterite film.

Next, a method for manufacturing the grain-oriented electrical steel sheet according to the present embodiment is described. Herein, the method for manufacturing the grain-oriented electrical steel sheet according to the embodiment is not limited to the following method. The following manufacturing method is an instance for manufacturing the oriented electrical steel sheet according to the embodiment.

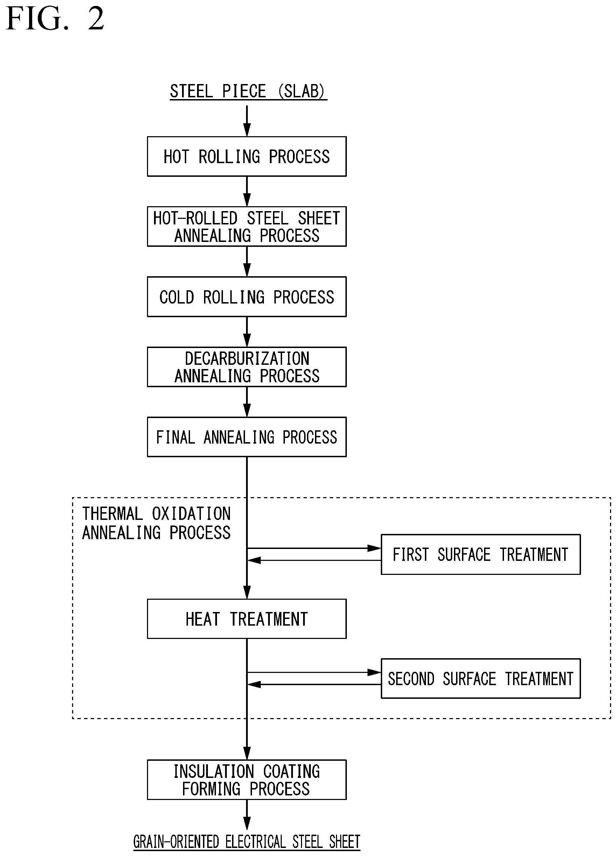

Figure 2 is a flow chart showing a method for manufacturing the grain-oriented electrical steel sheet according to the present embodiment. A method for manufacturing the grain-oriented electrical steel sheet according to the present embodiment mainly includes: a hot rolling process of performing hot rolling on slab (steel piece) having a predetermined chemical composition to obtain a hot-rolled steel sheet, a hot-rolled steel sheet annealing process of annealing the hot-rolled steel sheet to obtain a hot-rolled annealed sheet, a cold rolling process of performing one-time cold rolling or a plurality of times of cold rolling including annealing on the hot-rolled annealed sheet to obtain a cold-rolled steel sheet, a decarburization annealing process of performing decarburization annealing on the cold-rolled steel sheet to obtain a decarburization-annealed steel sheet, a final annealing process of applying an annealing separator to the decarburization-annealed steel sheet and performing final annealing to obtain final-annealed sheet, a thermal oxidation annealing process of performing thermal oxidation annealing on the final-annealed sheet to obtain a thermal oxidation-annealed sheet, and an insulation coating forming process of applying an insulation coating forming solution to the thermal oxidation-annealed sheet and performing a heat treatment to form an insulation coating on a surface of the thermal oxidation-annealed sheet.

Specifically, the method for manufacturing the grain-oriented electrical steel sheet according to the present embodiment includes:
the hot rolling process, the hot-rolled steel sheet annealing process, the cold rolling process, the decarburization annealing process, the final annealing process, the thermal oxidation annealing process, and the insulation coating forming process, in which
in the final annealing process,
an annealing separator including 20 to 99.5 mass% of an alumina, 0.5 to 20 mass% of a bismuth chloride, and the balance including a magnesia and impurities as percent solid is applied to the steel sheet after the decarburization annealing process, the annealing separator is dried, and then the final annealing is performed, and
in the thermal oxidation annealing process,
the steel sheet after the final annealing process is heated from a room temperature to a temperature range of 800 to 1100°C and is soaked for 5 to 200 seconds in a temperature range of 800 to 1100°C in an atmosphere such that an oxygen concentration is less than 1.0 vol% and an oxidation degree PH₂O/PH₂ is 0.010 to less than 0.50.

Each of the above process will be described in detail. Herein, in the following description, in a case where the conditions of each process are not described, known conditions may be appropriately applied.

### Hot rolling process

In the hot rolling process, a steel piece (for instance, a steel ingot such as a slab) having a predetermined chemical composition is hot rolled. For instance, the slab (steel piece) subjected to the hot rolling process may include, as a chemical composition, by mass%,
3.0 to 4.0% of Si,
0.010 to 0.50% of Mn,
0.020 to 0.20% of C,
0.0020 to 0.020% of N,
0.010 to 0.050% of acid-soluble Al,
0 to 0.040% of P,
0.0010 to 0.040% in total of S and Se,
0 to 0.50% of Sn,
0 to 0.50% of Cu,
0 to 0.50% of Cr,
0 to 0.50% of Sb,
0 to 0.10% of Mo,
0 to 0.10% of Bi, and
a balance including Fe and impurities.

In addition, the slab (steel piece) may contain, as a chemical composition, by mass%, at least one selected from the group consisting of
0.0050 to 0.50% of Sn,
0.010 to 0.50% of Cu,
0.010 to 0.50% of Cr,
0.010 to 0.50% of Sb,
0.0050 to 0.10% of Mo, and
0.00050 to 0.10% of Bi.

### 3.0 to 4.0 mass% of Si

Si (silicon) is a basic element for the steel piece (slab). When the Si content is less than 3.0%, the eddy-current loss cannot be sufficiently reduced, so that favorable magnetic characteristics cannot be obtained. Therefore, the Si content is 3.0% or more. The Si content is preferably 3.10% or more, and more preferably 3.20% or more. On the other hand, when the Si content is more than 4.0%, the steel sheet is embrittled, and the passability is remarkably deteriorated during manufacture, and thus the Si content is 4.0% or less. The Si content is preferably 3.70% or less, more preferably 3.60% or less, and more preferably 3.50% or less.

### 0.010 to 0.50 mass% of Mn

Mn (manganese) is a basic element for the steel piece (slab). When the Mn content is less than 0.010%, MnS or MnSe functioning as an inhibitor is hardly formed, secondary recrystallization does not sufficiently proceed, and favorable magnetic characteristics cannot be obtained. Therefore, the Mn content is 0.010% or more. The Mn content is preferably 0.030% or more, and more preferably 0.050% or more. On the other hand, when the Mn content is more than 0.50%, the steel undergoes phase transformation during secondary recrystallization annealing, secondary recrystallization does not sufficiently proceed, and favorable magnetic characteristics cannot be obtained, and therefore the Mn content is 0.50% or less. The Mn content is preferably 0.20% or less, more preferably 0.15% or less, and more preferably 0.10% or less.

### 0.020 to 0.20% mass% of C

C (carbon) is a basic element for the steel piece (slab). C is included for the purpose of increasing the development degree of the Goss orientation in secondary recrystallization. The C content necessary for improving the magnetic characteristics is 0.020% or more, preferably 0.040% or more as a slab. However, excessive residual of C in a final product may be a factor of iron loss deterioration. Therefore, it is necessary to perform the decarburization treatment in the decarburization annealing process, but when C is contained in the slab in an amount exceeding 0.20%, the decarburization treatment becomes difficult. The C content is 0.20% or less, preferably 0.15% or less, and more preferably 0.10% or less as a slab.

### 0.0020 to 0.020 mass% of N

N (nitrogen) is a basic element for the steel piece (slab). N is an element necessary for forming AlN as an inhibitor and increasing the development degree of the Goss orientation during secondary recrystallization.

The N content necessary for inhibitor formation is 0.0020% or more, preferably 0.0040% or more, and more preferably 0.0060% or more as a slab. On the other hand, as a slab, when the N content is more than 0.020%, blisters (pores) are generated in the steel sheet during cold rolling, the strength of the steel sheet increases, and passability during manufacture may be deteriorated. The N content is 0.020% or less, preferably 0.015% or less, and more preferably 0.010% or less as a slab. Similarly to C, excessive residual of N in a final product may be a cause of magnetism deterioration. Therefore, N needs to be purified at the time of final annealing.

### 0.010 to 0.050 mass% of acid-soluble Al

Acid-soluble Al (aluminum) (sol.Al) is a basic element for the steel piece (slab). Acid-soluble Al is an element necessary for forming AlN as an inhibitor and increasing the magnetic characteristics. The acid-soluble Al content is 0.010% or more, preferably 0.015 or more, and more preferably 0.020% or more as a slab. On the other hand, when acid-soluble Al is excessively contained in the slab, embrittlement may be remarkable. The acid-soluble Al content is 0.050% or less, preferably 0.040% or less, and more preferably 0.030% or less as a slab. Similarly to N, acid-soluble Al needs to be purified from the base steel sheet during final annealing.

### 0 to 0.040 mass% of P

P (phosphorus) is an optional element for the steel piece (slab). When the P content exceeds 0.040%, the workability of the steel sheet may be significantly deteriorated. Therefore, the P content may be 0.040% or less. The P content is preferably 0.030% or less, and more preferably 0.020% or less. On the other hand, the lower limit of the P content is not particularly limited, and it may be 0%. However, since P has an effect of improving the texture and improving the magnetic characteristics of the steel sheet, the P content may be more than 0% or 0.0020% or more.

### 0.0010 to 0.040 mass% in total of S and Se

S (sulfur) and Se (selenium) are basic elements for the steel piece (slab). S and Se are elements that form MnS, which is an inhibitor. The total amount of S and Se is 0.0010% or more, preferably 0.010% or more, and more preferably 0.020% or more as a slab. On the other hand, as a slab, the total amount of S and Se exceeding 0.040% is a cause of hot embrittlement, and hot rolling may be difficult. The total amount of S and Se is 0.040% or less, preferably 0.0350% or less, and more preferably 0.030% or less as a slab. Excessive residual of S and Se in a final product may also be a cause of magnetism deterioration. Therefore, S and Se also need to be purified from the base steel sheet during final annealing.

### 0 to 0.50 mass% of Sn

Sn (tin) is an optional element for the steel piece (slab). When the Sn content is more than 0.50%, secondary recrystallization becomes unstable, and magnetic characteristics may be adversely affected. Therefore, the Sn content may be 0.50% or less. The Sn content is preferably 0.30% or less, and more preferably 0.150% or less. On the other hand, the lower limit of the Sn content is not particularly limited, and it may be 0%. However, since Sn has an effect of improving magnetic characteristics by increasing the development degree of the Goss orientation, the Sn content may be more than 0% or 0.0050% or more.

### 0 to 0.50 mass% of Cu

Cu (copper) is an optional element for the steel piece (slab). When the Cu content exceeds 0.50%, the steel sheet may be embrittled during hot rolling. Therefore, the Cu content may be 0.50% or less. The Cu content is preferably 0.30% or less, and more preferably 0.10% or less. On the other hand, the lower limit of the Cu content is not particularly limited, and it may be 0%. However, since Cu has an effect of improving magnetic characteristics by increasing the development degree of the Goss orientation, the Cu content may be more than 0% or 0.010% or more.

### 0 to 0.50 mass% of Cr

Cr (chromium) is an optional element for the steel piece (slab). When the Cr content is more than 0.50%, an Cr oxide is formed, and magnetic characteristics may be adversely affected. Therefore, the Cr content may be 0.50% or less. The Cr content is preferably 0.30% or less, and more preferably 0.10% or less. On the other hand, the lower limit of the Cr content is not particularly limited, and it may be 0%. However, since Cr has an effect of improving magnetic characteristics by increasing the development degree of the Goss orientation, the Cr content may be more than 0% or 0.010% or more.

### 0 to 0.50 mass% of Sb

Sb (antimony) is an optional element for the steel piece (slab). When the Sb content is more than 0.50%, magnetic characteristics may be adversely affected. Therefore, the Sb content may be 0.50% or less. The Sb content is preferably 0.30% or less, and more preferably 0.10% or less. On the other hand, the lower limit of the Sb content is not particularly limited, and it may be 0%. However, since Sb functions as an inhibitor and has an effect of stabilizing secondary recrystallization, the Sb content may be more than 0% or 0.010% or more.

### 0 to 0.10 mass% of Mo

Mo (molybdenum) is an optional element for the steel piece (slab). When the Mo content is more than 0.10%, a problem may occur in the rollability of the steel sheet. Therefore, the Mo content may be 0.10% or less. The Mo content is preferably 0.08% or less, and more preferably 0.05% or less. On the other hand, the lower limit of the Mo content is not particularly limited, and it may be 0%. However, since Mo has an effect of improving magnetic characteristics by increasing the development degree of the Goss orientation, the Mo content may be more than 0% or 0.0050% or more.

### 0 to 0.10 mass% of Bi

Bi (bismuth) is an optional element for the steel piece (slab). When the Bi content is more than 0.10%, the passability during cold rolling may be deteriorated. In addition, when the purification at the time of the final annealing is insufficient and Bi remains excessively, the magnetic characteristics may be adversely affected. Therefore, the Bi content may be 0.10% or less. The Bi content is preferably 0.050% or less, more preferably 0.020% or less, and more preferably 0.0010% or less. On the other hand, the lower limit of the Bi content is not particularly limited, and it may be 0%. However, since Bi has an effect of improving magnetic characteristics, the Bi content may be more than 0% or 0.00050% or more.

The steel piece (slab) subjected to the hot rolling process may contain impurities. Herein, the impurities correspond to elements which are contaminated during industrial manufacture of steel from ores and scrap that are used as a raw material of steel, or from environment of a manufacturing process. In addition, the chemical composition of the steel piece (slab) subjected to the hot rolling process may be measured by the same method as for the chemical composition of the base steel sheet described above.

In the hot rolling process, at first, the steel piece is heat-treated. the heating temperature may be, for instance, 1200°C or higher and 1600°C or lower. The lower limit of the heating temperature is preferably 1280°C, and the upper limit of the heating temperature is preferably 1500°C. The heated steel piece is then hot rolled. The sheet thickness of the hot-rolled steel sheet after the hot rolling is preferably, for instance, in a range of 2.0 mm or more and 3.0 mm or less.

### Hot-rolled steel sheet annealing process

In the hot-rolled steel sheet annealing process, the hot-rolled steel sheet obtained in the hot rolling process is annealed. By performing the hot-rolled steel sheet annealing, recrystallization occurs in the steel sheet, and finally favorable magnetic characteristics can be achieved. The conditions of the hot-rolled steel sheet annealing are not particularly limited, but for instance, the hot-rolled steel sheet may be annealed in a temperature range of 900 to 1200°C for ten seconds to five minutes. In addition, the surface of the hot-rolled annealed sheet may be pickled after the hot-rolled steel sheet annealing and before cold rolling.

### Cold rolling process

In the cold rolling process, the hot-rolled annealed sheet after the hot-rolled steel sheet annealing process is subjected to one-time cold rolling or a plurality of times of cold rolling including intermediate annealing. Herein, since the hot-rolled annealed sheet has a favorable steel sheet shape by the hot-rolled steel sheet annealing, it is possible to reduce the possibility of fracture of the steel sheet in the first cold rolling. In addition, when the intermediate annealing is performed during the cold rolling, the heating method of the intermediate annealing is not particularly limited. In addition, the cold rolling may be performed three or more times including intermediate annealing, but since the manufacturing cost increases, it is preferable to perform the cold rolling once or twice.

The final cold rolling reduction (cumulative cold rolling ratio without intermediate annealing or cumulative cold rolling ratio after intermediate annealing) in the cold rolling may be, for instance, in a range of 80% or more and 95% or less. By controlling the final cold rolling reduction within the above range, the development degree in the { 110} <001> orientation can be finally increased, and destabilization of secondary recrystallization can be suppressed. Herein, the sheet thickness of the cold-rolled steel sheet subjected to the cold rolling is usually the sheet thickness (final sheet thickness) of the base steel sheet of the grain-oriented electrical steel sheet to be finally manufactured. The sheet thickness of the cold-rolled steel sheet after the cold rolling is preferably, for instance, in a range of 0.17 mm or more and 0.29 mm or less.

### Decarburization annealing process

In the decarburization annealing process, the cold-rolled steel sheet obtained in the cold rolling process is decarburization-annealed. By this decarburization annealing, C contained in the cold-rolled steel sheet is removed, and primary recrystallization occurs. The decarburization annealing is preferably performed in a wet atmosphere in order to remove C contained in the cold-rolled steel sheet, and for instance, annealing may be performed in a wet atmosphere in a temperature range of 700 to 1000°C for ten seconds to ten minutes.

In addition, a nitriding treatment may be performed after the decarburization annealing and before application of the annealing separator. In the nitriding treatment, the decarburization-annealed steel sheet after the decarburization annealing is subjected to the nitriding treatment to manufacture a nitriding-treated steel sheet. For instance, annealing may be performed in a temperature range of 700 to 850°C for 10 to 60 seconds in an atmosphere containing a gas having nitriding ability such as hydrogen, nitrogen, and ammonia.

### Final annealing process

In the final annealing process, an annealing separator is applied to the decarburization-annealed steel sheet obtained in the decarburization annealing process and final annealing is performed. For the final annealing, the annealing may be performed for a long time in a state where the steel sheet is wound in a coil shape. In order to prevent the coiled steel sheet from being burned during the final annealing, an annealing separator is applied to the decarburization-annealed steel sheet and dried before the final annealing.

The annealing separator contains a magnesia (MgO), an alumina (Al₂O₃), and a bismuth chloride. The annealing separator includes 20 to 99.5 mass% of an alumina, 0.5 to 20 mass% of a bismuth chloride, and the balance including a magnesia and impurities as percent solid. The bismuth chloride may be a bismuth oxychloride (BiOCl), a bismuth trichloride (BiCl₃), or the like.

The annealing conditions of the final annealing are not particularly limited, and known conditions may be appropriately adopted. For instance, in the final annealing, the decarburization-annealed steel sheet to which the annealing separator may be applied and dried is held in a temperature range of 1000°C or more and 1300°C or less for 10 hours or more and 60 hours or less. The atmosphere at the time of the final annealing may be, for instance, a nitrogen atmosphere or a mixed atmosphere of nitrogen and hydrogen. In addition, after the final annealing, the surface of the final-annealed sheet may be washed to perform powder removal.

By this final annealing, secondary recrystallization occurs in the steel sheet, and the crystal orientation is oriented to the {110}<001> orientation. In this secondary recrystallization structure, the magnetization easy axes are aligned in the rolling direction, and the grains are coarse. Due to this secondary recrystallization structure, excellent magnetic characteristics can be obtained. Herein, in the present embodiment, since the annealing separator contains a bismuth chloride, the formation of the forsterite film is suppressed, and the surface of the final-annealed sheet becomes smooth.

In addition, the atmosphere at the time of the final annealing may be changed to a hydrogen atmosphere to perform a purification treatment. By this purification treatment, elements such as Al, N, S, and Se contained in the steel sheet as a steel composition are discharged to the outside of the system, and the steel sheet is purified.

### Thermal oxidation annealing process

In the thermal oxidation annealing process, the final-annealed sheet obtained in the final annealing process is subjected to thermal oxidation annealing (heat treatment). In addition, the first surface treatment may be performed before the heat treatment, or the second surface treatment may be performed after the heat treatment.

### First surface treatment

The final-annealed sheet obtained in the final annealing process may be subjected to the first surface treatment as necessary. In the first surface treatment, pickling conditions are not particularly limited, but for instance, the final-annealed sheet may be immersed in an acid (first treatment solution) having a specific concentration. The first treatment solution may contain at least one of a hydrochloric acid, a sulfuric acid, a nitric acid, and a phosphoric acid, and has a total acid concentration of 1 to 20 mass% and a solution temperature of 50 to 90°C. The surface treatment of the final-annealed sheet may be performed for 3 to 60 seconds using the first treatment solution.

In the first surface treatment, the surface of the final-annealed sheet is brought into an active surface state, but on the other hand, it is preferable to perform the surface treatment under a condition that etch pits are not formed on the surface of the final-annealed sheet. Therefore, each of the above conditions may be controlled in a complex and inseparable manner. For instance, when the pickling strength is increased for some conditions among the above conditions, the active state of the surface and the smooth state of the surface may be compatible by changing the pickling strength so as to be weakened for the other conditions among the above conditions. Since those skilled in the art can execute surface control including pickling behavior, it is possible to control the surface state by combining the above conditions in consideration of the effect of the above conditions on the pickling strength.

Herein, when the total acid concentration of the first treatment solution is less than 1 mass%, it is difficult to bring the surface of the final-annealed sheet into an active surface state, and the internally oxidized SiO₂ is hardly formed in the next heat treatment. On the other hand, when the total acid concentration of the first treatment solution is more than 20 mass%, etch pits are likely to be formed on the surface of the final-annealed sheet. Similarly, when the solution temperature of the first treatment solution is lower than 50°C, an active surface state cannot be obtained, and when the solution temperature of the first treatment solution is higher than 90°C, etch pits are likely to be formed. Similarly, when the treatment time of the first surface treatment is less than 3 seconds, an active surface state cannot be obtained, and when the treatment time of the first surface treatment is more than 60 seconds, etch pits are likely to be formed.

### Heat treatment

In the heat treatment, the final-annealed sheet after the final annealing process or the final-annealed sheet after the first surface treatment is subjected to the thermal oxidation annealing. In this heat treatment, the steel sheet is heated from a room temperature to a temperature range of 800 to 1100°C and is soaked for 5 to 200 seconds in a temperature range of 800 to 1100°C in an atmosphere such that an oxygen concentration is less than 1.0 vol% and an oxidation degree PH₂O/PH₂ is 0.010 to less than 0.50. Herein, the oxidation degree PH₂O/PH₂ can be defined by the ratio of water vapor partial pressure PH₂O to the hydrogen partial pressure PH₂ in the atmosphere.

In the present embodiment, the internally oxidized SiO₂ is preferably formed in the vicinity of the surface in the final-annealed sheet by containing a Bi chloride in the annealing separator and then controlling the atmosphere in the heat treatment to the atmosphere described above. On the other hand, it is preferable that an externally oxidized film is not formed. Therefore, each of the above conditions is controlled in a complex and inseparable manner. For instance, internal oxidation is likely to occur when the oxidizability is enhanced by controlling each condition within the range of the above conditions, and external oxidation is likely to occur when the oxidizability is weakened by controlling each condition within the range of the above conditions. Those skilled in the art can combine each of the above conditions to control the oxidation reaction to form a target oxide.

For instance, when the oxygen concentration is 1.0 vol% or more, an internally oxidized SiO₂ is not formed, and the entire sheet surface is likely to be excessively oxidized. Therefore, the oxygen concentration is less than 1.0 vol%. The oxygen concentration is preferably 0.50 vol% or less, and more preferably 0.10 vol% or less. On the other hand, the lower limit of the oxygen concentration is not particularly limited, and is preferably as small as possible. However, since it is industrially difficult to control the oxygen concentration to 0 vol%, the oxygen concentration may be 1.0 × 10⁻²⁰ vol% or more. The oxygen concentration is preferably 1.0 × 10⁻¹⁹ vol% or more, and more preferably 1.0 × 10⁻¹⁸ vol% or more.

Similarly, when the oxidation degree PH₂O/PH₂ is less than 0.010, an internally oxidized SiO₂ is hardly formed. Therefore, the oxidation degree PH₂O/PH₂ is 0.010 or more. The oxidation degree PH₂O/PH₂ is preferably 0.020 or more, and more preferably 0.030 or more. On the other hand, when the oxidation degree PH₂O/PH₂ is 0.50 or more, an internally oxidized SiO₂ is not formed, and the entire sheet surface is likely to be excessively oxidized. Therefore, the oxidation degree PH₂O/PH₂ is less than 0.50. The oxidation degree PH₂O/PH₂ is preferably 0.40 or less, and more preferably 0.30 or less. The oxidation degree PH₂O/PH₂ can be derived from the hydrogen concentration and the dew point in the annealing atmosphere.

Similarly, when the soaking temperature is less than 800°C, an internally oxidized SiO₂ is hardly formed. Therefore, the soaking temperature is 800°C or higher. The soaking temperature is preferably 830°C or higher, and more preferably 860°C or higher. On the other hand, when the soaking temperature is higher than 1100°C, an internally oxidized SiO₂ is not formed, and the entire sheet surface is likely to be excessively oxidized. Therefore, the soaking temperature is 1100°C or lower. The soaking temperature is preferably 1050°C or lower, and more preferably 1000°C or lower.

Similarly, when the soaking time is less than 5 seconds, an internally oxidized SiO₂ is hardly formed. Therefore, the soaking time is 5 seconds or more. The soaking time is preferably 10 seconds or more, and more preferably 15 seconds or more. On the other hand, when the soaking time is more than 200 seconds, the entire sheet surface is likely to be excessively oxidized. Therefore, the soaking time is 200 seconds or less. The soaking time is preferably 150 seconds or less, and more preferably 100 seconds or less.

### Second surface treatment

The thermal oxidation-annealed sheet after the heat treatment may be subjected to the second surface treatment as necessary. In the second surface treatment, pickling conditions are not particularly limited, but for instance, the thermal oxidation-annealed sheet may be immersed in an acid (second treatment solution) having a specific concentration. The second treatment solution may contain at least one of a hydrochloric acid, a sulfuric acid, a nitric acid, and a phosphoric acid, and has a total acid concentration of 1 to 10 mass% and a solution temperature of 50 to 90°C. The surface treatment of the thermal oxidation-annealed sheet may be performed for 3 to 60 seconds using the second treatment solution.

In the second surface treatment, the residual oxide and the like on the surface of the thermal oxidation-annealed sheet are pickled, but on the other hand, it is preferable to perform the surface treatment under a condition that etch pits are not formed on the surface of the thermal oxidation-annealed sheet. Therefore, each of the above conditions may be controlled in a complex and inseparable manner. For instance, when the pickling strength is increased for some conditions among the above conditions, the pickling of the oxide and the smooth state of the surface may be compatible by changing the pickling strength so as to be weakened for the other conditions among the above conditions. Since those skilled in the art can execute surface control including pickling behavior, it is possible to control the surface state by combining the above conditions in consideration of the effect of the above conditions on the pickling strength.

Herein, when the total acid concentration of the second treatment solution is less than 1 mass%, it is difficult to pickle the residual oxide on the surface of the thermal oxidation-annealed sheet. On the other hand, when the total acid concentration of the second treatment solution is more than 10 mass%, etch pits are likely to be formed on the surface of the thermal oxidation-annealed sheet. Similarly, when the solution temperature of the second treatment solution is lower than 50°C, pickling of the residual oxide is difficult, and when the solution temperature of the second treatment solution is higher than 90°C, etch pits are likely to be formed. Similarly, when the treatment time of the second surface treatment is less than 3 seconds, pickling of the residual oxide is difficult, and when the treatment time of the second surface treatment is more than 60 seconds, etch pits are likely to be formed.

### Insulation coating forming process

In the insulation coating forming process, the insulation coating forming solution is applied to the thermal oxidation-annealed sheet after the thermal oxidation annealing process, and a heat treatment is performed. By this heat treatment, the insulation coating is formed on the surface of the thermal oxidation-annealed sheet. For instance, the insulation coating forming solution may contain colloidal silica and phosphate. The insulation coating forming solution preferably does not contain chromium.

The insulation coating applies the tension to the grain-oriented electrical steel sheet, and thereby, reduces the iron loss as a single steel sheet. Moreover, the insulation coating ensures interlaminar electrical insulation when the grain-oriented electrical steel sheets are utilized after being laminated, and thereby, reduces the iron loss as an iron core.

The insulation coating is formed by applying an insulation coating forming solution containing at least one of phosphate and colloidal silica as a main component to the surface of the thermal oxidation-annealed sheet and performing a heat treatment at, for instance, 350°C to 1150°C for 5 to 300 seconds. At the time of coating formation, oxidation degree PH₂O/PH₂ of the atmosphere may be controlled as necessary.

As the phosphate, a phosphate such as Ca, Al, or Sr is preferable, and among them, an aluminum phosphate is more preferable. The colloidal silica is not particularly limited to colloidal silica having a specific property. The particle size is not particularly limited to a specific particle size, but is preferably 200 nm (number average particle size) or less. For instance, it may be 5 to 30 nm. When the particle size exceeds 200 nm, colloidal silica may settle in the coating solution.

In the present embodiment, the internally oxidized SiO₂ is preferably formed in the vicinity of the surface in the thermal oxidation-annealed sheet in the thermal oxidation annealing process, so that the insulation coating formed in the insulation coating forming process preferably adheres to the thermal oxidation-annealed sheet (base steel sheet).

After the formation of the insulation coating, flattening annealing for shape correction may be performed as necessary. By performing flattening annealing on the steel sheet, the iron loss can be further reduced.

### Magnetic domain control process

In the present embodiment, the magnetic domain control treatment may be performed as necessary before the insulation coating forming process or after the insulation coating forming process. By performing the magnetic domain control treatment, the iron loss of the grain-oriented electrical steel sheet can be further reduced.

When the magnetic domain control treatment is performed before the insulation coating forming process, linear or dotted groove parts extending in a direction intersecting the rolling direction may be formed at predetermined intervals along the rolling direction. In addition, when the magnetic domain control treatment is performed after the insulation coating forming process, linear or dotted stress strain parts extending in a direction intersecting the rolling direction may be formed at predetermined intervals along the rolling direction. The width of the 180° magnetic domain is narrowed (180° magnetic domain is refined) by the magnetic domain control treatment.

In the case of forming the groove parts, a mechanical groove forming method using a gear or the like, a chemical groove forming method of forming a groove by electrolytic etching, a thermal groove forming method by laser irradiation, or the like can be applied. In addition, in the case of forming a stress strain part, laser beam irradiation, electron beam irradiation, or the like can be applied.

### Examples

Hereinafter, the effects of an aspect of the present invention are described in detail with reference to the following examples. However, the condition in the examples is an example condition employed to confirm the operability and the effects of the present invention, so that the present invention is not limited to the example condition. The present invention can employ various types of conditions as long as the conditions do not depart from the scope of the present invention and can achieve the object of the present invention.

A slab (steel piece) having a chemical composition shown in Table 1 was heated to 1350°C and subjected to hot rolling to obtain a hot-rolled steel sheet having a sheet thickness of 2.3 mm, and this hot-rolled steel sheet was annealed at 1100°C for 120 seconds and pickled. Thereafter, a cold-rolled steel sheet having a final sheet thickness was obtained by performing one-time cold rolling or a plurality of times of cold rolling including intermediate annealing. The cold-rolled steel sheet was subjected to decarburization annealing at 830°C for 100 seconds in a wet hydrogen atmosphere. After the decarburization annealing, a nitriding treatment was performed for Test No. 26 and Test No. 33 shown in Tables.

The annealing separator shown in Tables 3 to 6 was applied to the obtained decarburization-annealed steel sheet and dried. Herein, in the tables, an alumina and a bismuth chloride represent contents as percent solid, and the balance represents a magnesia and impurities. Thereafter, final annealing was performed by holding at 1200°C for 20 hours. The final annealing atmosphere was a mixed atmosphere of nitrogen and hydrogen, and then a hydrogen atmosphere. After the final annealing, the steel sheet was washed to remove an excessive annealing separator.

The obtained final-annealed sheet was subjected to the heat treatment under the conditions shown in Tables 7 to 10 as thermal oxidation annealing. As necessary, as shown in Tables 3 to 10, the first surface treatment and the second surface treatment were also performed.

An insulation coating forming solution containing colloidal silica and a phosphate was applied to the surface of the obtained thermal oxidation-annealed sheet, and a heat treatment was performed at 850°C for one minute to form an insulation coating having a weight per one surface of 2.5 to 4.5 g/m², thereby manufacturing a grain-oriented electrical steel sheet. Magnetic domain control treatment of irradiating the obtained grain-oriented electrical steel sheet with a laser beam was performed.

For the obtained grain-oriented electrical steel sheets Nos. 1 to 60, the chemical composition of the base steel sheet, the internally oxidized SiO₂ included within the range of 2.0 µm from the interface with the insulation coating toward the thickness direction in the base steel sheet, and the like were confirmed based on the above-described method. In addition, the coating adhesion and the magnetic characteristics of the obtained grain-oriented electrical steel sheets Nos. 1 to 60 were evaluated.

For instance, for SiO₂, a starting material was a small test piece of 10 mm in the width direction and 20 mm in the rolling direction, a cross section whose cutting direction is parallel to the thickness direction and perpendicular to the transverse direction was cut out from ten locations separated from each other on the sheet surface, an evaluation sample of 10 µm × 8 µm was prepared by FIB processing (MI4050 of Hitachi High-Tech Corporation), line analysis was performed along the thickness direction under the condition of an acceleration voltage of 200 kV by the TEM-EDS (for instance, JEM-2100PLUS of JEOL), quantitative analysis of the chemical composition was performed, and SiO₂ was identified from the chemical composition ratio. The elements quantitatively analyzed were five elements of Fe, P, Si, Al, and O, and from the result by the TEM-EDS, a region in which the Fe content is less than 80 atom%, the Si content is 30 atom% or more, and the O content is 55 atom% or more, excluding measurement noise, was distinguished to be the internally oxidized SiO₂. Next, a bright field image of SiO₂ identified by the above-described method was captured by the TEM under the conditions of an acceleration voltage of 200 kV and a magnification of 40,000 times, a luminance value of the bright field image of SiO₂ was acquired, a region having a similar luminance value was distinguished to be SiO₂, the number of pixels included within the range of 2.0 µm from the interface with the insulation coating toward the thickness direction in the base steel sheet and the number of pixels of SiO₂ were converted from pixel size to area, and the area fraction of the internally oxidized SiO₂ in the area of the range within 2.0 µm from the interface with the insulation coating toward the thickness direction in the base steel sheet was determined. For the bright field image, a visual field of 10 µm × 8 µm was observed at ten locations randomly selected. Herein, at the time of distinguishing, a region less than the pixel size was removed as noise from the analysis target. In addition, for distinguishing of each phase and measurement of the area, general image processing software such as ImageJ may be used, or manual correction may be included.

The coating adhesion was evaluated by a coating residual area fraction when the test piece is wound around a cylinder having a diameter of 20 mm and bent 180°. The area fraction of the residual surface of the coating in the area of the steel sheet in contact with the cylinder was calculated. The area of the steel sheet in contact with the roll was determined by calculation. The area of the residual surface was determined by capturing a photograph of the steel sheet after the test and performing image analysis on the captured image. The case where the coating residual area fraction was 95% or more was evaluated as Excellent (EX), the case where the coating residual area fraction was 90% or more and less than 95% was evaluated as VeryGood (VG), the case where the coating residual area fraction was 85% or more and less than 90% was evaluated as Good (G), the case where the coating residual area fraction was 80% or more and less than 85% was evaluated as Fair (F), and the case where the coating residual area fraction was less than 80% was evaluated as Poor. The case where the coating residual area fraction was 80% or more was determined as acceptable.

For the iron loss characteristics, the test piece was evaluated according to a single sheet tester (SST). Iron loss W17/50 (W/kg) defined as a power loss per unit weight (1 kg) of the steel sheet was measured under the conditions of an AC frequency of 50 Hz and an excitation magnetic flux density of 1.7 T. The case where iron loss W17/50 was less than 0.75 W/kg was determined as acceptable. Herein, for the magnetic flux density, magnetic flux density B8 (T) in the rolling direction was measured by applying a magnetic field of 800 A/m to the test piece.

The manufacturing conditions, manufacturing results, and evaluation results are shown in Tables 1 to 14. Herein, "-" of the chemical composition in the tables indicates that no alloying element is intentionally added, and "-" in those other than the chemical composition in the tables indicates not performed or not applicable.

**In** addition, "absence" of the intermediate ceramic layer in the layer structure in the tables indicates that a forsterite film or the like as an intermediate ceramic layer is not present, the insulation coating is arranged in contact with the base steel sheet, and the base steel sheet includes a smooth surface. In addition, "presence" of the intermediate ceramic layer indicates that there is an intermediate ceramic layer such as a forsterite film that adversely affects magnetic characteristics. The intermediate ceramic layer deteriorates the magnetic characteristics. In addition, "absence" of the internally oxidized SiO₂ in the tables indicates that a sufficient internally oxidized SiO₂ was not present in the range within 2.0 µm from the interface with the insulation coating toward the thickness direction in the base steel sheet. In addition, "area fraction" of the internally oxidized SiO₂ in the tables represents the average value of the area fraction of the internally oxidized SiO₂ in the area of the range within 2.0 µm from the interface with the insulation coating toward the thickness direction in the base steel sheet. In addition, "isoperimetric constant" of the internally oxidized SiO₂ in the tables represents the average value of the isoperimetric constants of the internally oxidized SiO₂ included within the range of 2.0 µm from the interface with the insulation coating toward the thickness direction in the base steel sheet,. In addition, "presence frequency in 10 visual fields" of the insulation coating in the tables represents the number of locations where when viewing the cross section at ten observation locations which are separated from each other on the sheet surface, the internally oxidized SiO₂ was preferably included within the range of 2.0 µm from the interface with the insulation coating toward the thickness direction in the base steel sheet.

Among Test Nos. 1 to 60, the present invention examples were excellent in coating adhesion and iron loss characteristics without relying on a forsterite film. On the other hand, among Test Nos. 1 to 60, comparative examples were not excellent in surface smoothness, coating adhesion, or iron loss characteristics.

**[Table 1]**

| STEEL TYPE | MANUFACTURING CONDITIONS | | | | | | | | | | | | |
|---|---|---|---|---|---|---|---|---|---|---|---|---|---|
| | CHEMICAL COMPOSITION OF STEEL PIECE (SLAB) (UNIT: mass%, BALANCE CONSISTING OF Fe AND IMPURITIES) | | | | | | | | | | | | |
| | Si | Mn | C | N | sol. Al | P | S + Se | Sn | Cu | Cr | Sb | Mo | Bi |
| a | 3.40 | 0.07 | 0.08 | 0. 007 | 0.02 | 0. 01 | 0. 025 | - | - | - | - | - | - |
| b | 3. 25 | 0. 11 | 0. 05 | 0. 008 | 0.02 | 0.02 | 0. 020 | - | - | - | - | - | - |
| c | 3. 35 | 0.12 | 0. 09 | 0. 009 | 0. 04 | 0.02 | 0. 024 | - | - | - | - | - | - |
| d | 3. 27 | 0. 13 | 0. 07 | 0. 006 | 0.02 | 0.02 | 0. 015 | - | 0. 03 | 0. 07 | - | 0.02 | 0. 018 |
| e | 3. 30 | 0.08 | 0.08 | 0. 008 | 0.02 | 0. 01 | 0. 025 | 0. 10 | 0.08 | 0. 06 | - | 0. 01 | 0. 006 |
| f | 3. 35 | 0.14 | 0. 08 | 0. 012 | 0. 03 | 0. 01 | 0. 028 | 0. 18 | 0. 20 | 0. 19 | 0. 01 | 0. 01 | 0. 015 |
| g | 3. 35 | 0. 09 | 0. 05 | 0. 008 | 0.02 | 0. 01 | 0. 022 | - | - | - | - | - | - |
| h | 3.40 | 0.08 | 0.07 | 0. 007 | 0. 03 | 0. 01 | 0. 023 | - | - | - | - | - | - |
| i | 3. 30 | 0. 09 | 0.08 | 0. 008 | 0.02 | 0. 01 | 0. 021 | - | 0.08 | 0.07 | - | 0. 01 | 0. 005 |
| J | 3. 30 | 0.07 | 0. 05 | 0. 008 | 0.02 | 0.02 | 0. 020 | - | - | - | - | - | 0. 010 |
| k | 3.40 | 0.07 | 0. 09 | 0. 009 | 0. 04 | 0.02 | 0. 024 | - | - | - | - | - | 0. 002 |
| l | 3. 33 | 0.07 | 0. 07 | 0. 006 | 0.02 | 0.02 | 0. 015 | - | 0. 03 | | - | 0.02 | 0. 003 |
| m | 3. 45 | 0.08 | 0. 07 | 0. 008 | 0.02 | 0.02 | 0. 020 | - | 0. 03 | 0. 07 | - | 0.02 | 0. 003 |
| n | 3. 55 | 0.15 | 0. 07 | 0. 007 | 0.02 | 0. 01 | 0. 020 | - | 0. 03 | 0. 07 | - | 0.02 | 0. 003 |
| o | 3. 62 | 0.07 | 0. 07 | 0. 007 | 0.02 | 0. 01 | 0. 020 | - | 0. 03 | 0. 07 | - | 0.02 | 0. 003 |

**[Table 2]**

| STEEL TYPE | MANUFACTURING RESULTS | | | | | | | | | | | | |
|---|---|---|---|---|---|---|---|---|---|---|---|---|---|
| | CHEMICAL COMPOSITION OF BASE STEEL SHEET OF GRAIN-ORIENTED ELECTRICAL STEEL SHEET (UNIT: mass%, BALANCE CONSISTING OF Fe AND IMPURITIES) | | | | | | | | | | | | |
| | Si | Mn | C | N | sol. Al | P | S + Se | Sn | Cu | Cr | Sb | Mo | Bi |
| a | 3. 25 | 0.07 | <0.002 | <0. 002 | <0. 001 | 0. 01 | <0. 002 | - | - | - | - | - | - |
| b | 3. 10 | 0. 11 | <0. 002 | <0. 002 | <0. 001 | 0. 02 | <0. 002 | - | - | - | - | - | - |
| c | 3. 20 | 0. 12 | <0. 002 | <0. 002 | <0. 001 | 0. 02 | <0. 002 | - | - | - | - | - | - |
| d | 3. 11 | 0. 13 | <0. 002 | <0. 002 | <0. 001 | 0. 02 | <0. 002 | - | 0. 03 | 0.07 | - | 0. 02 | <0. 002 |
| e | 3. 18 | 0. 08 | <0. 002 | <0. 002 | <0. 001 | 0. 01 | <0. 002 | 0. 10 | 0. 08 | 0. 06 | - | 0. 01 | <0. 002 |
| f | 3. 22 | 0. 14 | <0. 002 | <0. 002 | <0. 001 | 0. 01 | <0. 002 | 0. 18 | 0. 20 | 0. 19 | 0.01 | 0. 01 | <0. 002 |
| g | 3. 23 | 0. 08 | <0. 002 | <0. 002 | <0. 001 | 0. 02 | <0. 002 | - | - | - | - | - | - |
| h | 3. 30 | 0. 08 | <0.002 | <0. 002 | <0. 001 | 0. 02 | <0.002 | - | - | - | - | - | - |
| i | 3. 19 | 0. 08 | <0. 002 | <0. 002 | <0. 001 | 0. 02 | <0. 002 | - | 0. 08 | 0.07 | - | 0. 01 | <0. 002 |
| J | 3. 22 | 0. 05 | <0. 002 | <0. 002 | <0. 001 | 0. 02 | <0. 002 | - | - | - | - | - | <0. 002 |
| k | 3. 32 | 0. 06 | <0. 002 | <0. 002 | <0. 001 | 0. 02 | <0. 002 | - | - | - | - | - | <0. 002 |
| l | 3. 20 | 0. 07 | <0. 002 | <0. 002 | <0. 001 | 0. 02 | <0. 002 | - | 0. 03 | - | - | 0. 02 | <0. 002 |
| m | 3. 31 | 0. 08 | <0. 002 | <0. 002 | <0. 001 | 0. 02 | <0. 002 | - | 0. 03 | 0.07 | - | 0. 02 | <0. 002 |
| n | 3. 40 | 0. 15 | <0. 002 | <0. 002 | <0. 001 | 0. 01 | <0. 002 | - | 0. 03 | 0.07 | - | 0. 02 | <0. 002 |
| o | 3. 53 | 0.07 | <0.002 | <0. 002 | <0. 001 | 0. 01 | <0.002 | - | 0. 03 | 0.07 | - | 0. 02 | <0. 002 |

**[Table 3]**

| No. | STEEL TYPE | MANUFACTURING CONDITIONS | | | | | | | | |
|---|---|---|---|---|---|---|---|---|---|---|
| | | SHEET THICKNESS OF COLD-ROLLED STEEL SHEET | FINAL ANNEALING | | | | THERMAL OXIDATION ANNEALING | | | |
| | | | ANNEALING SEPARATOR | | | | FIRST SURFACE TREATMENT | | | |
| | | | ALUMINA AS PERCENT SOLID | BISMUTH CHLORIDE | | BALANCE | FIRST TREATMENT SOLUTION | | | **TREATMENT** TIME |
| | | | | TYPE | PERCENT SOLID | | ACID TYPE | ACID CONCENTRATION | TEMPERATURE | |
| | | mm | mass% | | mass% | mass% | | mass% | °C | sec. |
| 1 | a | 0. 23 | 75 | BiOCl | 10 | 15 | - | - | - | - |
| 2 | b | 0. 23 | 75 | BiOCl | 10 | 15 | - | - | - | - |
| 3 | c | 0. 20 | 75 | BiOCl | 10 | 15 | SULFURIC ACID | 5 | 65 | 10 |
| 4 | d | 0. 20 | 75 | BiOCl | 10 | 15 | SULFURIC ACID | 8 | 85 | 15 |
| 5 | e | 0. 23 | 75 | BiOCl | 10 | 15 | SULFURIC ACID | 15 | 80 | 15 |
| 6 | f | 0. 23 | 75 | BiOCl | 10 | 15 | SULFURIC ACID | 15 | 85 | 20 |
| 7 | a | 0. 23 | 75 | BiOCl | 10 | 15 | - | - | - | - |
| 8 | b | 0. 23 | 75 | BiOCl | 10 | 15 | - | - | - | - |
| 9 | c | 0. 20 | 75 | BiOCl | 10 | 15 | SULFURIC ACID | 5 | 80 | 10 |
| 10 | d | 0. 20 | 75 | BiOCl | 10 | 15 | SULFURIC ACID | 8 | 85 | 15 |
| 11 | e | 0.20 | 75 | BiOCl | 10 | 15 | SULFURIC ACID | 1 | 80 | 15 |
| 12 | f | 0. 20 | 75 | BiOCl | 10 | 15 | SULFURIC ACID | 2 | 85 | 20 |
| 13 | a | 0. 20 | 18 | BiOCl | 10 | 72 | - | - | - | - |
| 14 | b | 0. 20 | 23 | BiOCl | 10 | 67 | - | - | - | - |
| 15 | c | 0. 20 | 50 | BiOCl | 10 | 40 | - | - | - | - |

**[Table 4]**

| No. | STEEL TYPE | MANUFACTURING CONDITIONS | | | | | | | | |
|---|---|---|---|---|---|---|---|---|---|---|
| | | SHEET THICKNESS OF COLD-ROLLED STEEL SHEET | FINAL ANNEALING | | | | THERMAL OXIDATION ANNEALING | | | |
| | | | ANNEALING SEPARATOR | | | | FIRST SURFACE TREATMENT | | | |
| | | | ALUMINA AS PERCENT SOLID | BISMUTH CHLORIDE | | BALANCE | FIRST TREATMENT SOLUTION | | | TREATMENT TIME |
| | | | | TYPE | PERCENT SOLID | | ACID TYPE | ACID CONCENTRATION | TEMPERATURE | |
| | | mm | mass% | | mass% | mass% | | mass% | °C | sec. |
| 16 | d | 0. 20 | 95 | BiOCl | 5 | 0 | - | - | - | - |
| 17 | e | 0. 20 | 100 | - | 0 | 0 | - | - | - | - |
| 18 | f | 0. 20 | 75 | BiOCl | 0. 3 | 24. 7 | - | - | - | - |
| 19 | a | 0. 20 | 75 | BiOCl | 0. 7 | 24. 3 | - | - | - | - |
| 20 | b | 0. 20 | 75 | BiOCl | 5 | 20 | - | - | - | - |
| 21 | c | 0. 20 | 75 | BiOCl | 18 | 7 | - | - | - | - |
| 22 | d | 0. 20 | 75 | BiOCl | 22 | 3 | - | - | - | - |
| 23 | e | 0. 20 | 75 | BiCl₃ | 10 | 15 | - | - | - | - |
| 24 | f | 0. 20 | 75 | BiOCl | 10 | 15 | - | - | - | - |
| 25 | a | 0. 20 | 75 | BiOCl | 10 | 15 | - | - | - | - |
| 26 | b | 0. 20 | 75 | BiOCl | 10 | 15 | - | - | - | - |
| 27 | c | 0. 20 | 75 | BiOCl | 10 | 15 | - | - | - | - |
| 28 | c | 0. 20 | 10 | | 0 | 90 | - | - | - | - |
| 29 | d | 0.20 | 75 | BiOCl | 10 | 15 | - | - | - | - |
| 30 | e | 0.23 | 60 | BioCl | 5 | 35 | HYDROCHLORIC ACID | 10 | 60 | 10 |

**[Table 5]**

| No. | STEEL TYPE | MANUFACTURING CONDITIONS | | | | | | | | |
|---|---|---|---|---|---|---|---|---|---|---|
| | | SHEET THICKNESS OF COLD-ROLLED STEEL SHEET | FINAL ANNEALING | | | | THERMAL OXIDATION ANNEALING | | | |
| | | | ANNEALING SEPARATOR | | | | FIRST SURFACE TREATMENT | | | |
| | | | ALUMINA AS PERCENT SOLID | BISMUTH CHLORIDE | | BALANCE mass% | FIRST TREATMENT SOLUTION | | | TREATMENT TIME |
| | | | | TYPE | PERCENT SOLID | | ACID TYPE | ACID CONCENTRATION | TEMPERATURE | |
| | | mm | mass% | | mass% | | | mass% | °C | sec. |
| 31 | f | 0. 23 | 60 | BiOCl | 5 | 35 | NITRIC ACID | 5 | 60 | 10 |
| 32 | a | 0. 23 | 60 | BiOCl | 5 | 35 | PHOSPHORIC ACID | 15 | 60 | 5 |
| 33 | b | 0. 20 | 60 | BiCl₃ | 5 | 35 | HYDROCHLORIC ACID | 10 | 60 | 20 |
| 34 | c | 0. 20 | 60 | BiCl₃ | 5 | 35 | NITRIC ACID | 5 | 60 | 10 |
| 35 | d | 0. 20 | 60 | BiCl₃ | 5 | 35 | PHOSPHORIC ACID | 10 | 60 | 15 |
| 36 | a | 0. 20 | 18 | BiOCl | 10 | 72 | - | - | - | - |
| 37 | b | 0. 20 | 23 | BiOCl | 10 | 67 | - | - | - | - |
| 38 | c | 0. 20 | 50 | BiOCl | 10 | 40 | - | - | - | - |
| 39 | d | 0. 20 | 95 | BiOCl | 5 | 0 | - | - | - | - |
| 40 | e | 0. 20 | 100 | - | 0 | 0 | - | - | - | - |
| 41 | f | 0. 20 | 75 | BiOCl | 0. 3 | 24. 7 | - | - | - | - |
| 42 | a | 0. 20 | 75 | BiOCl | 0. 7 | 24. 3 | - | - | - | - |
| 43 | b | 0. 20 | 75 | BiCl₃ | 5 | 20 | - | - | - | - |
| 44 | c | 0. 20 | 75 | BiCl₃ | 18 | 7 | - | - | - | - |
| 45 | d | 0. 20 | 75 | BiCl₃ | 22 | 3 | - | - | - | - |

**[Table 6]**

| No. | STEEL TYPE | MANUFACTURING CONDITIONS | | | | | | | | |
|---|---|---|---|---|---|---|---|---|---|---|
| | | SHEET THICKNESS OF COLD-ROLLED STEEL SHEET | FINAL ANNEALING | | | | THERMAL OXIDATION ANNEALING | | | |
| | | | ANNEALING SEPARATOR | | | | FIRST SURFACE TREATMENT | | | |
| | | | ALUMINA AS PERCENT SOLID | BISMUTH CHLORIDE | | BALANCE | FIRST TREATMENT SOLUTION | | | TREATMENT TIME |
| | | | | TYPE | PERCENT SOLID | | ACID TYPE | ACID CONCENTRATION | TEMPERATURE | |
| | | mm | mass% | | mass% | mass% | | mass% | °C | sec. |
| 46 | e | 0. 20 | 75 | BiCl₃ | 10 | 15 | - | - | - | - |
| 47 | f | 0. 20 | 75 | BiOCl | 10 | 15 | - | - | - | - |
| 48 | a | 0. 20 | 75 | BiOCl | 10 | 15 | - | - | - | - |
| 49 | g | 0. 18 | 75 | BiOCl | 10 | 15 | - | - | - | - |
| 50 | h | 0. 19 | 75 | BiOCl | 10 | 15 | - | - | - | - |
| 51 | h | 0. 19 | 10 | - | 0 | 90 | - | - | - | - |
| 52 | i | 0. 22 | 75 | BiOCl | 10 | 15 | - | - | - | - |
| 53 | J | 0. 20 | 60 | BiOCl | 5 | 35 | - | - | - | - |
| 54 | k | 0. 20 | 60 | BiOCl | 5 | 35 | - | - | - | - |
| 55 | l | 0. 20 | 60 | BiOCl | 5 | 35 | - | - | - | - |
| 56 | m | 0. 22 | 60 | BiOCl | 5 | 35 | - | - | - | - |
| 57 | n | 0. 23 | 60 | BiOCl | 5 | 35 | - | - | - | - |
| 58 | o | 0. 22 | 60 | BiOCl | 5 | 35 | - | - | - | - |
| 59 | a | 0. 23 | 75 | BiOCl | 10 | 15 | - | - | - | - |
| 60 | b | 0. 23 | 75 | BiOCl | 10 | 15 | - | - | - | - |

**[Table 7]**

| No. | STEEL TYPE | MANUFACTURING CONDITIONS | | | | | | | |
|---|---|---|---|---|---|---|---|---|---|
| | | THERMAL OXIDATION ANNEALING | | | | | | | |
| | | HEATING STAGE | | | | SECOND SURFACE TREATMENT | | | |
| | | ATMOSPHERE | | SOAKING TEMPERATURE | SOAKING TIME | SECOND TREATMENT SOLUTION | | | TREATMENT TIME |
| | | OXYGEN CONCENTRATION | PH₂O /PH₂ | | | ACID TYPE | ACID CONCENTRATION | TEMPERATURE | |
| | | vol% | | °C | sec. | | mass% | °C | sec. |
| 1 | a | 0. 4 | 0.015 | 820 | 8 | - | - | - | - |
| 2 | b | 0.4 | 0. 455 | 820 | 8 | - | - | - | - |
| 3 | c | 0.4 | 0. 023 | 1010 | 10 | - | - | - | - |
| 4 | d | 0. 4 | 0. 351 | 1020 | 10 | - | - | - | - |
| 5 | e | 0.4 | 0. 037 | 880 | 30 | SULFURIC ACID | 5 | 55 | 5 |
| 6 | f | 0. 4 | 0. 250 | 880 | 30 | SULFURIC ACID | 7 | 75 | 45 |
| 7 | a | 0. 4 | 0. 370 | 780 | 5 | - | - | - | - |
| 8 | b | 0. 4 | 0. 150 | 1120 | 5 | - | - | - | - |
| 9 | c | 0. 4 | 0. 070 | 830 | 3 | - | - | - | - |
| 10 | d | 0. 4 | 0. 050 | 830 | 210 | - | - | - | - |
| 11 | e | 0. 4 | 0. 008 | 860 | 20 | SULFURIC ACID | 5 | 70 | 5 |
| 12 | f | 0. 4 | 0. 520 | 860 | 20 | SULFURIC ACID | 7 | 75 | 10 |
| 13 | a | 0. 4 | 0. 250 | 880 | 30 | - | - | - | - |
| 14 | b | 0. 4 | 0. 250 | 880 | 30 | - | - | - | - |
| 15 | c | 0. 4 | 0. 250 | 880 | 30 | - | - | - | - |

**[Table 8]**

| No. | STEEL TYPE | MANUFACTURING CONDITIONS | | | | | | | |
|---|---|---|---|---|---|---|---|---|---|
| | | THERMAL OXIDATION ANNEALING | | | | | | | |
| | | HEATING STAGE | | | | SECOND SURFACE TREATMENT | | | |
| | | ATMOSPHERE | | SOAKING TEMPERATURE | SOAKING TIME | SECOND TREATMENT SOLUTION | | | TREATMENT TIME |
| | | OXYGEN CONCENTRATION | PH₂O /PH₂ | | | ACID TYPE | ACID CONCENTRATION | TEMPERATURE | |
| | | vol% | | °C | sec. | | mass% | °C | sec. |
| 16 | d | 0. 4 | 0.250 | 880 | 30 | - | - | - | - |
| 17 | e | 0. 4 | 0.250 | 880 | 30 | - | - | - | - |
| 18 | f | 0. 4 | 0. 250 | 880 | 30 | - | - | - | - |
| 19 | a | 0. 4 | 0.250 | 880 | 30 | - | - | - | - |
| 20 | b | 0. 4 | 0.250 | 880 | 30 | - | - | - | - |
| 21 | c | 0. 4 | 0. 250 | 880 | 30 | - | - | - | - |
| 22 | d | 0. 4 | 0. 250 | 880 | 30 | - | - | - | - |
| 23 | e | 0. 4 | 0.250 | 880 | 30 | - | - | - | - |
| 24 | f | 1. 2 | 0.250 | 880 | 30 | - | - | - | - |
| 25 | a | 0. 8 | 0. 250 | 880 | 30 | - | - | - | - |
| 26 | b | 0. 01 | 0.250 | 880 | 30 | - | - | - | - |
| 27 | c | <0. 01 | 0. 250 | 880 | 30 | - | - | - | - |
| 28 | c | 0. 4 | 0. 250 | 880 | 30 | - | - | - | - |
| 29 | d | - | - | - | - | - | - | - | - |
| 30 | e | 0. 2 | 0. 020 | 850 | 20 | - | - | - | - |

**[Table 9]**

| No. | STEEL TYPE | MANUFACTURING CONDITIONS | | | | | | | |
|---|---|---|---|---|---|---|---|---|---|
| | | THERMAL OXIDATION ANNEALING | | | | | | | |
| | | HEATING STAGE | | | | SECOND SURFACE TREATMENT | | | |
| | | ATMOSPHERE | | SOAKING TEMPERATURE | SOAKING TIME | SECOND TREATMENT SOLUTION | | | TREATMENT TIME |
| | | OXYGEN CONCENTRATION | PH₂O /PH₂ | | | ACID TYPE | ACID CONCENTRATION | TEMPERATURE | |
| | | vol% | | °C | sec. | | mass% | °C | sec. |
| 31 | f | 0. 2 | 0. 020 | 850 | 20 | - | - | - | - |
| 32 | a | 0. 2 | 0. 020 | 850 | 20 | - | - | - | - |
| 33 | b | 0. 2 | 0. 050 | 900 | 10 | HYDROCHLORIC ACID | 5 | 60 | 10 |
| 34 | c | 0. 2 | 0. 050 | 900 | 10 | NITRIC ACID | 3 | 60 | 10 |
| 35 | d | 0. 2 | 0. 050 | 900 | 10 | PHOSPHORIC ACID | 10 | 60 | 10 |
| 36 | a | <0.01 | 0. 250 | 880 | 30 | SULFURIC ACID | 4 | 55 | 5 |
| 37 | b | <0.01 | 0. 175 | 880 | 30 | SULFURIC ACID | 4 | 55 | 5 |
| 38 | c | <0. 01 | 0.175 | 880 | 30 | SULFURIC ACID | 4 | 75 | 45 |
| 39 | d | <0.01 | 0. 175 | 880 | 30 | SULFURIC ACID | 4 | 70 | 5 |
| 40 | e | <0.01 | 0. 175 | 880 | 30 | SULFURIC ACID | 5 | 75 | 45 |
| 41 | f | <0.01 | 0. 175 | 900 | 15 | SULFURIC ACID | 5 | 70 | 5 |
| 42 | a | <0.01 | 0.175 | 900 | 15 | SULFURIC ACID | 5 | 75 | 10 |
| 43 | b | <0.01 | 0. 175 | 900 | 15 | HYDROCHLORIC ACID | 5 | 60 | 10 |
| 44 | c | <0.01 | 0. 095 | 900 | 15 | NITRIC ACID | 5 | 60 | 10 |
| 45 | d | <0.01 | 0. 095 | 850 | 100 | SULFURIC ACID | 3 | 75 | 10 |

**[Table 10]**

| No. | STEEL TYPE | MANUFACTURING CONDITIONS | | | | | | | |
|---|---|---|---|---|---|---|---|---|---|
| | | THERMAL OXIDATION ANNEALING | | | | | | | |
| | | HEATING STAGE | | | | SECOND SURFACE TREATMENT | | | |
| | | ATMOSPHERE | | SOAKING TEMPERATURE | SOAKING TIME | SECOND TREATMENT SOLUTION | | | TREATMENT TIME |
| | | OXYGEN CONCENTRATION | PH₂O /PH₂ | | | ACID TYPE | ACID CONCENTRATION | TEMPERATURE | |
| | | vol% | | °C | sec. | | mass% | °C | sec. |
| 46 | e | <0. 01 | 0. 095 | 850 | 100 | SULFURIC ACID | 3 | 60 | 10 |
| 47 | f | 1. 2 | 0. 095 | 850 | 100 | SULFURIC ACID | 3 | 55 | 5 |
| 48 | a | <0. 01 | 0. 095 | 850 | 100 | HYDROCHLORIC ACID | 3 | 60 | 10 |
| 49 | g | <0. 01 | 0. 095 | 1050 | 7 | NITRIC ACID | 8 | 60 | 10 |
| 50 | h | <0. 01 | 0. 095 | 1050 | 7 | PHOSPHORIC ACID | 8 | 60 | 10 |
| 51 | h | <0. 01 | 0. 095 | 1050 | 7 | - | - | - | - |
| 52 | i | - | - | - | - | SULFURIC ACID | 8 | 75 | 10 |
| 53 | J | <0. 01 | 0.017 | 900 | 10 | SULFURIC ACID | 5 | 60 | 10 |
| 54 | k | <0. 01 | 0. 017 | 900 | 10 | SULFURIC ACID | 3 | 60 | 10 |
| 55 | l | <0. 01 | 0.017 | 900 | 10 | SULFURIC ACID | 10 | 60 | 10 |
| 56 | m | <0. 01 | 0.017 | 900 | 10 | SULFURIC ACID | 5 | 60 | 10 |
| 57 | n | <0. 01 | 0.017 | 900 | 10 | SULFURIC ACID | 3 | 60 | 10 |
| 58 | o | <0. 01 | 0.017 | 900 | 10 | SULFURIC ACID | 10 | 60 | 10 |
| 59 | a | 0. 4 | 0.015 | 820 | 8 | NITRIC ACID | 2 | 55 | 5 |
| 60 | b | 0. 4 | 0. 455 | 820 | 8 | SULFURIC ACID | 2 | 55 | 5 |

**[Table 11]**

| No. | STEEL TYPE | MANUFACTURING RESULTS | | | | | | | EVALUATION RESULTS | | | EVALUATION |
|---|---|---|---|---|---|---|---|---|---|---|---|---|
| | | LAYER STRUCTURE | | | BASE STEEL SHEET | | | | MAGNETIC FLUX DENSITY B8 | IRON LOSS W_{17/50} | COATING ADHESION | |
| | | BASE STEEL SHEET | INTERMEDIATE CERAMIC LAYER | INSULATION COATING | INTERNALLY OXIDIZED SiO₂ | | | | | | | |
| | | | | | PRESENCE OR ABSENCE | AREA FRACTION | ISOPERIMETRIC CONSTANT | PRESENCE FREQUENCY IN 10 VISUAL FIELDS | | | | |
| | | | | | | % | | | T | W/k g | | |
| 1 | a | PRESENCE | ABSENCE | PRESENCE | PRESENCE | 1. 9 | 0. 32 | 4 | 1. 93 | 0. 64 | F | INVENTIVE EXAMPLE |
| 2 | b | PRESENCE | ABSENCE | PRESENCE | PRESENCE | 1. 9 | 0. 36 | 5 | 1. 94 | 0. 59 | F | INVENTIVE EXAMPLE |
| 3 | c | PRESENCE | ABSENCE | PRESENCE | PRESENCE | 0. 8 | 0. 18 | 8 | 1. 94 | 0. 56 | F | INVENTIVE EXAMPLE |
| 4 | d | PRESENCE | ABSENCE | PRESENCE | PRESENCE | 1.6 | 0.17 | 8 | 1. 95 | 0. 58 | F | INVENTIVE EXAMPLE |
| 5 | e | PRESENCE | ABSENCE | PRESENCE | PRESENCE | 1.2 | 0. 05 | 10 | 1. 96 | 0. 65 | G | INVENTIVE EXAMPLE |
| 6 | f | PRESENCE | ABSENCE | PRESENCE | PRESENCE | 1. 4 | 0. 03 | 10 | 1. 97 | 0. 65 | G | INVENTIVE EXAMPLE |
| 7 | a | PRESENCE | ABSENCE | PRESENCE | PRESENCE | 0. 1 | 0. 45 | - | 1. 93 | 0. 76 | Poor | COMPARATIVE EXAMPLE |
| 8 | b | PRESENCE | ABSENCE | PRESENCE | PRESENCE | 0. 1 | 0.42 | - | 1. 92 | 0. 77 | Poor | COMPARATIVE FXAMPLE |
| 9 | c | PRESENCE | ABSENCE | PRESENCE | PRESENCE | 0. 1 | 0. 38 | - | 1. 93 | 0. 76 | Poor | COMPARATIVE EXAMPLE |
| 10 | d | PRESENCE | ABSENCE | PRESENCE | ABSENCE | - | - | - | 1. 94 | 0. 75 | Poor | COMPARATIVE EXAMPLE |
| 11 | e | PRESENCE | ABSENCE | PRESENCE | PRESENCE | 0. 1 | 0. 38 | - | 1. 93 | 0. 75 | Poor | COMPARATIVE EXAMPLE |
| 12 | f | PRESENCE | ABSENCE | PRESENCE | ABSENCE | - | - | - | 1. 94 | 0. 75 | Poor | COMPARATIVE EXAMPLE |
| 13 | a | PRESENCE | PRESENCE | PRESENCE | ABSENCE | - | - | - | 1. 90 | 0. 76 | F | COMPARATIVE EXAMPLE |
| 14 | b | PRESENCE | ABSENCE | PRESENCE | PRESENCE | 1. 8 | 0. 34 | 2 | 1. 91 | 0. 74 | F | INVENTIVE EXAMPLE |
| 15 | c | PRESENCE | ABSENCE | PRESENCE | PRESENCE | 1. 5 | 0. 33 | 3 | 1. 91 | 0. 74 | F | INVENTIVE EXAMPLE |

**[Table 12]**

| No. | STEEL TYPE | MANUFACTURING RESULTS | | | | | | | EVALUATION RESULTS | | | EVALUATION |
|---|---|---|---|---|---|---|---|---|---|---|---|---|
| | | LAYER STRUCTURE | | | BASE STEEL SHEET | | | | MAGNETIC FLUX DENSITY B8 | IRON LOSS W_{17/50} | COATING ADHESION | |
| | | BASE STEEL SHEET | INTERMEDIATE CERAMIC LAYER | INSULATION COATING | INTERNALLY OXIDIZED SiO₂ | | | | | | | |
| | | | | | PRESENCE OR ABSENCE | AREA FRACTION | ISOPERIMETRIC CONSTANT | PRESENCE FREQUENCY IN 10 VISUAL FIELDS | | | | |
| | | | | | | % | | | T | W/k g | | |
| 16 | d | PRESENCE | ABSENCE | PRESENCE | PRESENCE | 1. 7 | 0. 32 | 3 | 1. 92 | 0. 72 | F | INVENTIVE EXAMPLE |
| 17 | e | PRESENCE | ABSENCE | PRESENCE | PRESENCE | 0. 1 | 0.39 | - | 1. 92 | 0. 82 | Poor | COMPARATIVE EXAMPLE |
| 18 | f | PRESENCE | PRESENCE | PRESENCE | ABSENCE | - | - | - | 1. 90 | 0. 76 | Poor | COMPARATIVE EXAMPLE |
| 19 | a | PRESENCE | ABSENCE | PRESENCE | PRESENCE | 0. 4 | 0. 04 | 3 | 1. 92 | 0. 74 | F | INVENTIVE EXAMPLE |
| 20 | b | PRESENCE | ABSENCE | PRESENCE | PRESENCE | 0. 3 | 0. 06 | 3 | 1. 92 | 0. 74 | F | INVENTIVE EXAMPLE |
| 21 | c | PRESENCE | ABSENCE | PRESENCE | PRESENCE | 0. 9 | 0. 12 | 3 | 1. 91 | 0. 74 | F | INVENTIVE EXAMPLE |
| 22 | d | PRESENCE | ABSENCE | PRESENCE | ABSENCE | - | - | - | 1. 91 | 0. 73 | Poor | COMPARATIVE EXAMPLE |
| 23 | e | PRESENCE | ABSENCE | PRESENCE | PRESENCE | 0. 4 | 0. 05 | 4 | 1. 93 | 0. 72 | F | INVENTIVE EXAMPLE |
| 24 | f | PRESENCE | PRESENCE | PRESENCE | ABSENCE | - | - | - | 1. 91 | 0. 75 | Poor | COMPARATIVE EXAMPLE |
| 25 | a | PRESENCE | ABSENCE | PRESENCE | PRESENCE | 0. 6 | 0. 04 | 3 | 1. 92 | 0. 73 | F | INVENTIVE EXAMPLE |
| 26 | b | PRESENCE | ABSENCE | PRESENCE | PRESENCE | 0. 7 | 0. 03 | 3 | 1. 91 | 0. 72 | F | INVENTIVE EXAMPLE |
| 27 | c | PRESENCE | ABSENCE | PRESENCE | PRESENCE | 0. 9 | 0. 03 | 4 | 1. 92 | 0. 73 | F | INVENTIVE EXAMPLE |
| 28 | c | PRESENCE | PRESENCE | PRESENCE | ABSENCE | - | - | - | 1. 92 | 0. 77 | F | COMPARATIVE EXAMPLE |
| 29 | d | PRESENCE | ABSENCE | PRESENCE | ABSENCE | - | - | - | 1. 93 | 0. 72 | Poor | COMPARATIVE EXAMPLE |
| 30 | e | PRESENCE | ABSENCE | PRESENCE | PRESENCE | 0. 8 | 0. 25 | 6 | 1. 92 | 0. 72 | F | INVENTIVE EXAMPLE |

**[Table 13]**

| No. | STEEL TYPE | MANUFACTURING RESULTS | | | | | | | EVALUATION RESULTS | | | EVALUATION |
|---|---|---|---|---|---|---|---|---|---|---|---|---|
| | | LAYER STRUCTURE | | | BASE STEEL SHEET | | | | MAGNETIC FLUX DENSITY B8 | IRON LOSS W_{17/50} | COATING ADHESION | |
| | | BASE STEEL SHEET | INTERMEDIATE CERAMIC LAYER | INSULATION COATING | INTERNALLY OXIDIZED SiO₂ | | | | | | | |
| | | | | | PRESENCE OR ABSENCE | AREA FRACTION | ISOPERIMETRIC CONSTANT | PRESENCE FREQUENCY IN 10 VISUAL FIELDS | | | | |
| | | | | | | % | | | T | W/k g | | |
| 31 | f | PRESENCE | ABSENCE | PRESENCE | PRESENCE | 0. 7 | 0. 24 | 6 | 1. 91 | 0. 73 | F | INVENTIVE EXAMPLE |
| 32 | a | PRESENCE | ABSENCE | PRESENCE | PRESENCE | 0. 8 | 0. 23 | 6 | 1. 92 | 0. 72 | F | INVENTIVE EXAMPLE |
| 33 | b | PRESENCE | ABSENCE | PRESENCE | PRESENCE | 1. 2 | 0. 05 | 10 | 1. 93 | 0. 69 | G | INVENTIVE EXAMPLE |
| 34 | c | PRESENCE | ABSENCE | PRESENCE | PRESENCE | 1. 3 | 0. 04 | 10 | 1. 94 | 0. 68 | G | INVENTIVE EXAMPLE |
| 35 | d | PRESENCE | ABSENCE | PRESENCE | PRESENCE | 1. 4 | 0. 05 | 10 | 1. 95 | 0. 68 | G | INVENTIVE EXAMPLE |
| 36 | a | PRESENCE | PRESENCE | PRESENCE | ABSENCE | - | - | - | 1. 91 | 0. 77 | F | COMPARATIVE EXAMPLE |
| 37 | b | PRESENCE | ABSENCE | PRESENCE | PRESENCE | 2. 5 | 0. 29 | 8 | 1. 97 | 0. 63 | G | INVENTIVE EXAMPLE |
| 38 | c | PRESENCE | ABSENCE | PRESENCE | PRESENCE | 2. 1 | 0. 33 | 8 | 1. 97 | 0. 62 | G | INVENTIVE EXAMPLE |
| 39 | d | PRESENCE | ABSENCE | PRESENCE | PRESENCE | 1. 9 | 0. 28 | 7 | 1. 98 | 0. 62 | G | INVENTIVE EXAMPLE |
| 40 | e | PRESENCE | ABSENCE | PRESENCE | PRESENCE | 0. 1 | 0. 42 | - | 1. 93 | 0. 77 | Poor | COMPARATIVE EXAMPLE |
| 41 | f | PRESENCE | PRESENCE | PRESENCE | ABSENCE | - | - | - | 1. 92 | 0. 77 | Poor | COMPARATIVE EXAMPLE |
| 42 | a | PRESENCE | ABSENCE | PRESENCE | PRESENCE | 0. 8 | 0. 02 | 7 | 1.95 | 0. 68 | G | INVENTIVE EXAMPLE |
| 43 | b | PRESENCE | ABSENCE | PRESENCE | PRESENCE | 0. 9 | 0. 05 | 7 | 1. 96 | 0. 64 | G | INVENTIVE EXAMPLE |
| 44 | c | PRESENCE | ABSENCE | PRESENCE | PRESENCE | 1. 2 | 0. 10 | 8 | 1. 96 | 0. 64 | G | INVENTIVE EXAMPLE |
| 45 | d | PRESENCE | ABSENCE | PRESENCE | ABSENCE | - | - | - | 1. 90 | 0. 72 | Poor | COMPARATIVE EXAMPLE |

**[Table 14]**

| No. | STEEL TYPE | MANUFACTURING RESULTS | | | | | | | EVALUATION RESULTS | | | EVALUATION |
|---|---|---|---|---|---|---|---|---|---|---|---|---|
| | | LAYER STRUCTURE | | | BASE STEEL SHEET | | | | MAGNETIC FLUX DENSITY B8 | IRON LOSS W_{17/50} | COATING ADHESION | |
| | | BASE STEEL SHEET | INTERMEDIATE CERAMIC LAYER | INSULATION COATING | INTERNALLY OXIDIZED SiO₂ | | | | | | | |
| | | | | | PRESENCE OR ABSENCE | AREA FRACTION | ISOPERIMETRIC CONSTANT | PRESENCE FREQUENCY IN 10 VISUAL FIELDS | | | | |
| | | | | | | % | | | T | W/k g | | |
| 46 | e | PRESENCE | ABSENCE | PRESENCE | PRESENCE | 0. 6 | 0. 05 | 6 | 1. 95 | 0. 60 | G | INVENTIVE EXAMPLE |
| 47 | f | PRESENCE | PRESENCE | PRESENCE | ABSENCE | - | - | - | 1. 92 | 0. 76 | Poor | COMPARATIVE EXAMPLE |
| 48 | a | PRESENCE | ABSENCE | PRESENCE | PRESENCE | 0. 8 | 0. 05 | 7 | 1. 97 | 0. 60 | G | INVENTIVE EXAMPLE |
| 49 | g | PRESENCE | ABSENCE | PRESENCE | PRESENCE | 0. 8 | 0. 03 | 9 | 1. 96 | 0. 56 | G | INVENTIVE EXAMPLE |
| 50 | h | PRESENCE | ABSENCE | PRESENCE | PRESENCE | 1. 2 | 0. 03 | 8 | 1. 96 | 0. 61 | G | INVENTIVE EXAMPLE |
| 51 | h | PRESENCE | PRESENCE | PRESENCE | ABSENCE | - | - | - | 1. 97 | 0. 79 | F | COMPARATIVE EXAMPLE |
| 52 | i | PRESENCE | ABSENCE | PRESENCE | ABSENCE | - | - | - | 1. 90 | 0. 72 | Poor | COMPARATIVE EXAMPLE |
| 53 | j | PRESENCE | ABSENCE | PRESENCE | PRESENCE | 1. 5 | 0. 05 | 7 | 1. 96 | 0. 61 | G | INVENTIVE EXAMPLE |
| 54 | k | PRESENCE | ABSENCE | PRESENCE | PRESENCE | 1. 5 | 0. 05 | 8 | 1. 97 | 0. 62 | G | INVENTIVE EXAMPLE |
| 55 | l | PRESENCE | ABSENCE | PRESENCE | PRESENCE | 1. 2 | 0. 05 | 7 | 1. 95 | 0. 60 | G | INVENTIVE EXAMPLE |
| 56 | m | PRESENCE | ABSENCE | PRESENCE | PRESENCE | 1. 1 | 0. 02 | 5 | 1. 96 | 0. 61 | G | INVENTIVE EXAMPLE |
| 57 | n | PRESENCE | ABSENCE | PRESENCE | PRESENCE | 1. 0 | 0. 02 | 5 | 1. 97 | 0. 63 | G | INVENTIVE EXAMPLE |
| 58 | o | PRESENCE | ABSENCE | PRESENCE | PRESENCE | 0. 9 | 0. 02 | 5 | 1. 95 | 0. 63 | G | INVENTIVE EXAMPLE |
| 59 | a | PRESENCE | ABSENCE | PRESENCE | PRESENCE | 1. 8 | 0. 31 | 4 | 1. 94 | 0. 63 | G | INVENTIVE EXAMPLE |
| 60 | b | PRESENCE | ABSENCE | PRESENCE | PRESENCE | 1. 7 | 0. 37 | 5 | 1. 95 | 0. 58 | G | INVENTIVE EXAMPLE |

### INDUSTRIAL APPLICABILITY

According to the above aspects of the present invention, it is possible to provide the grain-oriented electrical steel sheet excellent in the coating adhesion without relying on the forsterite film, and the method for manufacturing the same. In the grain-oriented electrical steel sheet, the forsterite film is made not to exist, the surface of the base steel sheet is smooth, and the surface region of the base steel sheet is internally oxidized favorably, so that the coating adhesion is excellent. Therefore, it is possible to preferably improve the iron loss. Accordingly, the present invention has significant industrial applicability.

### REFERENCE SIGNS LIST

- 1: Grain-oriented electrical steel sheet
- 11: Base steel sheet
- 11a: Internally oxidized SiO₂
- 12: Insulation coating

## Claims

1. A grain-oriented electrical steel sheet comprising a base steel sheet and an insulation coating arranged in contact with the base steel sheet, **characterized in that**
the base steel sheet includes, as a chemical composition, by mass%,
3.0 to 4.0% of Si,
0.010 to 0.50% of Mn, and
a balance including Fe and impurities, and
the base steel sheet includes an internally oxidized SiO₂ within a range of 2.0 µm from an interface with the insulation coating toward a thickness direction when viewing a cross section whose cutting direction is parallel to the thickness direction and perpendicular to a transverse direction.

2. The grain-oriented electrical steel sheet according to claim 1, wherein
the base steel sheet further includes, as the chemical composition, by mass%,
0.010% or less of C,
0.010% or less of N,
0.020% or less of acid-soluble Al,
0.040% or less of P,
0.010% or less in total of S and Se,
0.50% or less of Sn,
0.50% or less of Cu,
0.50% or less of Cr,
0.50% or less of Sb,
0.10% or less of Mo, and
0.10% or less of Bi.

3. The grain-oriented electrical steel sheet according to claim 1 or 2, wherein
the internally oxidized SiO₂ shows a dendrite shape when viewing the cross section.

4. The grain-oriented electrical steel sheet according to claim 1 or 2, wherein
when viewing the cross section at ten observation locations which are separated from each other on a sheet surface, the ten observation locations include five or more of a location where the internally oxidized SiO₂ is included.

5. A method for manufacturing the grain-oriented electrical steel sheet according to claim 1 or 2,
the method comprising: a hot rolling process; a hot-rolled steel sheet annealing process; a cold rolling process; a decarburization annealing process; a final annealing process; a thermal oxidation annealing process; and an insulation coating forming process, wherein
in the final annealing process,
an annealing separator including 20 to 99.5 mass% of an alumina, 0.5 to 20 mass% of a bismuth chloride, and a balance including a magnesia and impurities as percent solid is applied to the steel sheet after the decarburization annealing process, the annealing separator is dried, and then the final annealing is performed, and
in the thermal oxidation annealing process,
the steel sheet after the final annealing process is heated from a room temperature to a temperature range of 800 to 1100°C and is soaked for 5 to 200 seconds in a temperature range of 800 to 1100°C in an atmosphere such that an oxygen concentration is less than 1.0 vol% and an oxidation degree PH₂O/PH₂ is 0.010 to less than 0.50.

6. The method for manufacturing the grain-oriented electrical steel sheet according to claim 5, wherein
in the thermal oxidation annealing process,
as a first surface treatment, the steel sheet after the final annealing process is immersed for 3 to 60 seconds in a first treatment solution such that at least one of a hydrochloric acid, a sulfuric acid, a nitric acid, and a phosphoric acid is included, a total acid concentration is 1 to 20 mass%, and a solution temperature is 50 to 90°C, and
as a heat treatment, the steel sheet after the first surface treatment is heated and soaked.

7. The method for manufacturing the grain-oriented electrical steel sheet according to claim 5, wherein
in the thermal oxidation annealing process,
as a second surface treatment, the steel sheet after being heated and soaked is immersed for 3 to 60 seconds in a second treatment solution such that at least one of a hydrochloric acid, a sulfuric acid, a nitric acid, and a phosphoric acid is included, a total acid concentration is 1 to 10 mass%, and a solution temperature of 50 to 90°C.
